# EUROPEAN PATENT SPECIFICATION

(11) **EP 4 277 078 B1**
(45) Date of publication and mention of the grant of the patent: **27.08.2025**
(21) Application number: 23168892.0
(22) Date of filing: 20.04.2023
(51) Int. Cl.: H02J 7/00, H01M 10/42

(54) **CONTROL CIRCUIT APPARATUS OF BATTERY SYSTEM AND BATTERY MANAGEMENT SYSTEM**
STEUERSCHALTUNGSVORRICHTUNG EINES BATTERIESYSTEMS UND BATTERIEVERWALTUNGSSYSTEM
APPAREIL DE CIRCUIT DE COMMANDE DE SYSTÈME DE BATTERIE ET SYSTÈME DE GESTION DE BATTERIE

(30) Priority: 09.05.2022 CN 202210496908
(43) Date of publication of application: 15.11.2023
(73) Proprietor: Huawei Digital Power Technologies Co., Ltd., Shenzhen, 518043 (CN)
(72) Inventor: FAN, Xianyan, Shenzhen 518043 (CN); JIANG, Hongxu, Shenzhen 518043 (CN); ZHANG, Shuang, Shenzhen 518043 (CN)
(74) Representative: Thun, Clemens

(56) References cited:
- WO-A1-2021/143263
- WO-A2-2013/005440
- CN-A- 107 658 936
- CN-A- 111 796 189
- US-A1- 2016 094 063
- US-A1- 2019 109 468

## Description

### TECHNICAL FIELD

This application relates to the field of battery technologies, and in particular, to a control circuit apparatus of a battery system and a battery management system.

### BACKGROUND

A lithium battery system includes a battery group, and the battery group includes a plurality of batteries, with battery cells, connected in series and/or connected in parallel. In an operating process of the lithium battery system, voltages of cells of different batteries in the plurality of batteries are not completely the same. Consequently, cell capacities of the batteries are not the same. This results in overcharge or overdischarge of the battery group. Therefore, the voltages of the cells in the battery group need to be equalized.

Currently, a method for equalizing the voltages of the cells in the battery group is as follows: When a voltage of a cell is excessively high, excessive electric energy in the cell is transferred to a battery for storage, to implement low-voltage equalization on the high-voltage cell; and when a voltage of a cell is excessively low, electric energy stored in the battery is transferred to the cell, to implement high-voltage equalization on the low-voltage cell.

Although an equalization circuit can be used to implement a voltage step-down equalization function of the high-voltage cell, and implement a voltage step-up equalization function of the low-voltage cell, a driving apparatus of an electronic component in the equalization circuit is complex.

Therefore, how to reduce complexity of a driving apparatus of an equalization circuit of a cell in a battery system becomes an urgent technical problem to be resolved.

The document US 2019/0109468 A1 shows a cell balancing method and system. Especially, an active charging and a passive discharging of individual cells is shown.

The document CN 111796189 A also shows a cell balancing system for a string of batteries. Also here, an active charging and a passive discharging of individual cells is shown.

The document US 2016/0094063 A1 shows a system and method for controlling polarity in an active balancing system for a battery.

The document WO 2021/143263 A1 shows an energy balance control device, an according battery system, and an according energy balance control method.

The document CN 107658936 A1 also shows a battery management system, especially a balancing of individual cells in a string of batteries.

The document WO 2013/005440 A2 shows a cell equalization control system for a string of batteries.

### SUMMARY

The present invention is defined by the independent claims. Further advantageous developments are shown by the dependent claims.

This application provides a control circuit apparatus of a battery system and a battery management system, to reduce complexity of a driving apparatus of an equalization circuit of the battery system.

According to a first aspect, this application provides a control circuit apparatus of a battery system. The battery system includes m battery units, and the m battery units are connected in series. The control circuit apparatus includes a first port, a switch matrix network unit, a first equalization unit, a second equalization unit, and a second port. The first port, the switch matrix network unit, the second equalization unit, and the second port are sequentially connected. The first equalization unit and the second equalization unit are connected in parallel.

The first port is configured to connect the m battery units, and the second port is configured to connect a power supply.

The switch matrix network unit is configured to: connect a to-be-discharged battery unit in the m battery units to the first equalization unit, and connect a to-be-charged battery unit in the m battery units to the second equalization unit.

The first equalization unit is configured to discharge the to-be-discharged battery unit through a resistor unit.

The second equalization unit is configured to charge the to-be-charged battery unit through the power supply.

The battery system further comprises a voltage sampling circuit unit, and the voltage sampling circuit unit separately forms a loop with the m battery units through the switch matrix network unit.

The switch matrix network unit is further configured to connect a to-be-sampled battery unit in the m battery units to the voltage sampling circuit.

The voltage sampling circuit unit is configured to sample the to-be-sampled battery unit to obtain a voltage value of the to-be-sampled battery unit, wherein the voltage value is used to determine whether the to-be-sampled battery unit is the to-be-charged battery unit or the to-be-discharged battery unit.

The battery system further comprises a capacitor control unit, the capacitor control unit comprises a capacitor and an eighth switch unit, and the capacitor and the eighth switch unit are connected in series.

The eighth switch unit is turned off when the to-be-sampled battery unit in the m battery units needs to be sampled, and turned on when the to-be-charged battery unit needs to be charged. The capacitor control unit and the second equalization unit are connected in parallel.

In the apparatus, the resistor unit in the first equalization unit discharges a cell that needs to be discharged, so that a voltage of the cell is gradually reduced, and discharge equalization is implemented. Therefore, when low-voltage equalization needs to be performed on a high-voltage cell, the to-be-discharged battery unit needs to be connected to a resistor, that is, no complex component is required, and no complex driving solution is required. Therefore, a circuit structure is simplified, and costs are reduced.

With reference to the apparatus in the first aspect, in a first possible circuit structure, the second equalization unit includes a transformer, a first switch unit, a second switch unit, and a third switch unit, and the transformer includes a first primary-side winding and a first secondary-side winding. The first primary-side winding and the third switch unit are connected in series to form a first primary-side circuit, the first primary-side circuit is connected to the second port, and when the first primary-side circuit forms a loop with the power supply through the second port, a first terminal of the first primary-side winding is connected to a positive electrode of the power supply. The first switch unit, the first secondary-side winding, and the second switch unit are sequentially connected in series to form a first secondary-side circuit, and the first secondary-side circuit is connected to the switch matrix network unit.

The second equalization unit is configured to: when a voltage of a first connection point between the first secondary-side circuit and the switch matrix network unit is greater than a voltage of a second connection point between the first secondary-side circuit and the switch matrix network unit, turn on the second switch unit, and alternately turn on the first switch unit and the third switch unit. The first connection point is connected to a first terminal of the first secondary-side winding, and the first terminal of the first secondary-side winding and the first terminal of the first primary-side winding are a group of dotted terminals.

In the apparatus, when the to-be-charged battery unit is charged, the third switch unit may be turned on, and the first switch unit may be turned off, so that the power supply may transfer energy to the first primary-side winding, the first primary-side winding stores the energy. Then, the first switch unit is turned on, and the third switch unit is turned off, so that the first secondary-side winding may transfer the stored energy to the to-be-charged battery unit, to charge the to-be-charged battery unit. Therefore, charging equalization is implemented.

With reference to the first possible circuit structure, the first switch unit includes a first field effect MOS transistor.

Optionally, the first MOS transistor is connected to the first connection point through a drain. In this way, when the voltage of the first connection point is greater than the voltage of the second connection point, the first MOS transistor may be turned on, so that the first secondary-side winding may transfer energy to the to-be-charged battery unit. Therefore, voltage step-up equalization on the to-be-charged battery unit is implemented.

With reference to the first possible circuit structure, the second switch unit includes a first diode, and a positive electrode of the first diode is connected to the first connection point.

The positive electrode of the first diode is connected to the first connection point. According to unidirectional conductivity of a diode, when the voltage of the first connection point is greater than the voltage of the second connection point, the first diode may allow a current to pass through, to rectify the current.

With reference to the first possible circuit structure, the third switch unit includes a second MOS transistor.

Optionally, a drain of the second MOS transistor is connected to the positive electrode of the power supply through the second port. In this way, when the voltage of the first connection point is greater than the voltage of the second connection point, the third MOS transistor may be turned on, so that the first primary-side winding may store energy from the power supply. Therefore, voltage step-up equalization on the to-be-charged battery unit is implemented.

With reference to the apparatus in the first aspect, in a second possible circuit structure, the second equalization unit further includes a fourth switch unit and a fifth switch unit, and the transformer further includes a second secondary-side winding. The fourth switch unit, the second secondary-side winding, and the fifth switch unit are sequentially connected in series to form a second secondary-side circuit. The second secondary-side circuit is connected to the switch matrix network unit, a connection point between the second secondary-side circuit and the switch matrix network unit is the first connection point, and the other connection point between the second secondary-side circuit and the switch matrix network unit is the second connection point. A first terminal of the second secondary-side winding and the first terminal of the first primary-side winding are a group of dotted terminals. The second connection point is connected to the first terminal of the first secondary-side winding.

The second equalization unit is further configured to: when a voltage difference between the first connection point and the second connection point is less than zero, turn on the fifth switch unit, and alternately turn on the fourth switch unit and the third switch unit.

The apparatus may implement voltage step-up equalization on battery units with opposite positive and negative voltages by using one primary-side winding and two secondary-side windings. This not only reduces a quantity of components, but also reduces restriction on connection of positive and negative electrodes of the battery units, so that the apparatus has a wider application scenario.

With reference to the second possible circuit structure, the fourth switch unit includes a third field MOS transistor.

Optionally, a drain of the third MOS transistor is connected to the second connection point. In this way, when the voltage of the first connection point is less than the voltage of the second connection point, the third MOS transistor may be turned on, so that the second secondary-side winding may transfer energy to the to-be-charged battery unit. Therefore, voltage step-up equalization on the to-be-charged battery unit is implemented.

With reference to the second possible circuit structure, the fifth switch unit includes a second diode, and a positive electrode of the second diode is connected to the second connection point.

The positive electrode of the second diode is connected to the second connection point. According to unidirectional conductivity of the diode, when the voltage of the first connection point is less than the voltage of the second connection point, the first diode may allow a current to pass through, to rectify the current.

With reference to the apparatus in the first aspect, in a third possible circuit structure, the second equalization unit further includes a sixth switch unit, and the transformer further includes a second primary-side winding. The sixth switch unit and the second primary-side winding are connected in series to form a second primary-side circuit. The second primary-side circuit is connected to the second port. When the second primary-side circuit forms a loop with the power supply through the second port, a first terminal of the second primary-side winding is connected to a negative electrode of the power supply. The first terminal of the second primary-side circuit and a first terminal of the first secondary-side circuit are a group of dotted terminals.

The second equalization unit is further configured to: when a voltage difference between the first connection point and the second connection point is less than zero, turn on the second switch unit, and alternately turn on the first switch unit and the sixth switch unit.

The apparatus may implement voltage step-up equalization on battery units with opposite positive and negative voltages by using two primary-side windings and one secondary-side winding. This not only reduces a quantity of components, but also reduces restriction on connection of positive and negative electrodes of the battery units, so that the apparatus has a wider application scenario.

With reference to the second possible circuit structure, the sixth switch unit includes a fourth MOS transistor, and a drain of the fourth MOS transistor is connected to the positive electrode of the power supply through the second port. In this way, when the voltage of the first connection point is less than the voltage of the second connection point, the fourth MOS transistor may be turned on, so that the second primary-side winding may store energy from the power supply. Therefore, voltage step-up equalization on the to-be-charged battery unit is implemented.

With reference to the apparatus in the first aspect, the first equalization unit includes a seventh switch unit and a resistor unit, the seventh switch unit and the resistor unit are connected in series, and the first equalization unit is connected to the switch matrix network unit.

The first equalization unit is configured to turn on the seventh switch unit, so that the resistor unit discharges the to-be-discharged battery unit.

In the apparatus, when the battery unit needs to be discharged, the seventh switch unit is turned on, so that the resistor unit consumes redundant energy in the battery unit. Therefore, a high-voltage battery unit is equalized.

The seventh switch unit includes a fifth MOS transistor and a sixth MOS transistor, and a source of the fifth MOS transistor is connected to a source of the sixth MOS transistor, or a drain of the fifth MOS transistor is connected to a drain of the sixth MOS transistor.

The apparatus may implement voltage step-down equalization on battery units with opposite positive and negative voltages by using one first equalization unit. This not only reduces a quantity of components, but also reduces restriction on connection of positive and negative electrodes of the battery units, so that the apparatus has a wider application scenario.

With reference to the apparatus in the first aspect, the apparatus may further include a voltage sampling circuit unit, and the voltage sampling circuit unit separately forms a loop with the m battery units through the switch matrix network unit.

The switch matrix network unit is further configured to connect a to-be-sampled battery unit in the m battery units to the voltage sampling circuit.

The voltage sampling circuit unit is configured to sample the to-be-sampled battery unit to obtain a voltage value of the to-be-sampled battery unit, where the voltage value is used to determine whether the to-be-sampled battery unit is the to-be-charged battery unit or the to-be-discharged battery unit.

In the apparatus, the voltage sampling circuit unit may sample each battery unit in the m battery units to obtain a voltage value of each battery unit, and further determine, based on the voltage value of each battery unit, which battery unit in the m battery units is the to-be-discharged battery unit or the to-be-charged battery unit. This facilitates equalization on a voltage of the battery unit.

The voltage sampling circuit unit includes a first resistor, a second resistor, a third resistor, and a fourth resistor. The first resistor, the second resistor, the third resistor, and the fourth resistor are sequentially connected in series. An end connecting the third resistor and the fourth resistor is grounded. There is a third port between the first resistor and the third resistor, and there is a fourth port between the second resistor and the fourth resistor. The third port and the fourth port are configured to output an electrical signal for determining the voltage value of the to-be-sampled battery unit.

The third port and the fourth port may output the electrical signal for determining the voltage value of the to-be-sampled battery unit to an ADC, and then the ADC converts the electrical signal of the voltage value that is continuously changing into a discrete electrical signal in a digital form, to obtain the voltage value of the to-be-sampled battery unit.

With reference to the apparatus in the first aspect, the apparatus may further include a capacitor control unit, the capacitor control unit includes a capacitor and an eighth switch unit, and the capacitor and the eighth switch unit are connected in series.

The eighth switch unit is: turned off when the to-be-sampled battery unit in the m battery units needs to be sampled, and turned on when the to-be-charged battery unit needs to be charged.

The capacitor control unit and the second equalization unit are connected in parallel.

In this apparatus, when the second equalization unit is used to equalize a low-voltage battery unit, the eighth switch unit is turned on, and the capacitor may be connected to a circuit to filter out a high-frequency ripple, to obtain a gentle direct current voltage. In addition, when the to-be-sampled battery unit is sampled by using the voltage sampling circuit unit, the eighth switch unit is turned off, to prevent a sampling delay caused due to connection of the capacitor, and prevent affecting accuracy of the voltage value of the to-be-sampled battery unit.

The eighth switch unit includes a seventh MOS transistor and an eighth MOS transistor, and a source of the seventh MOS transistor is connected to a source of the eighth MOS transistor, or a drain of the seventh MOS transistor is connected to a drain of the eighth MOS transistor.

The apparatus may implement voltage sampling on battery units with opposite positive and negative voltages by using the voltage sampling circuit unit. This not only reduces a quantity of components, but also reduces restriction on connection of positive and negative electrodes of the battery units, so that the apparatus has a wider application scenario.

According to a second aspect, this application provides a battery management system. The battery management system is connected to a battery system, the battery management system includes a controller and the control circuit apparatus according to the first aspect, and the control circuit apparatus is connected to the controller.

In an implementation, the control circuit apparatus includes a first port, a switch matrix network unit, a first equalization unit, a second equalization unit, and a second port. The first port, the switch matrix network unit, the second equalization unit, and the second port are sequentially connected. The first equalization unit and the second equalization unit are connected in parallel.

Correspondingly, the controller is configured to output a first control signal to the control circuit apparatus, where the first control signal is used to control the switch matrix network unit to connect a to-be-discharged battery unit to the first equalization unit in the control circuit apparatus, and is further used to control the first equalization unit to discharge the to-be-discharged battery unit through a resistor unit.

The control circuit apparatus is configured to: receive the first control signal, connect the to-be-discharged battery unit and the first equalization unit through the switch matrix network unit under control of the first control signal, and discharge the to-be-discharged battery unit through a resistor unit under control of the first control signal.

The controller is further configured to output a second control signal to the control circuit apparatus, where the second control signal is used to control the switch matrix network unit to connect a to-be-charged battery unit to a second equalization unit in the control circuit apparatus, and is further used to control the second equalization unit to charge the to-be-charged battery unit through a power supply.

The control circuit apparatus is configured to: receive the second control signal, connect the to-be-charged battery unit and the second equalization unit through the switch matrix network unit under control of the second control signal, and charge the to-be-charged battery unit through the power supply under control of the second control signal.

In some implementations, the second equalization unit includes a transformer, a first switch unit, a second switch unit, and a third switch unit, and the transformer includes a first primary-side winding and a first secondary-side winding. The first primary-side winding and the third switch unit are connected in series to form a first primary-side circuit, the first primary-side circuit is connected to the second port, and when the first primary-side circuit forms a loop with the power supply through the second port, a first terminal of the first primary-side winding is connected to a positive electrode of the power supply. The first switch unit, the first secondary-side winding, and the second switch unit are sequentially connected in series to form a first secondary-side circuit, and the first secondary-side circuit is connected to the switch matrix network unit.

Correspondingly, when a voltage of a first connection point between the first secondary-side circuit and the switch matrix network unit is greater than a voltage of a second connection point between the first secondary-side circuit and the switch matrix network unit, the second control signal is specifically used to turn on the second switch unit, and alternately turn on the first switch unit and the third switch unit. The first connection point is connected to a first terminal of the first secondary-side winding, and the first terminal of the first secondary-side winding and the first terminal of the first primary-side winding are a group of dotted terminals.

In some implementations, the second equalization unit further includes a fourth switch unit and a fifth switch unit, and the transformer further includes a second secondary-side winding. The fourth switch unit, the second secondary-side winding, and the fifth switch unit are sequentially connected in series to form a second secondary-side circuit. The second secondary-side circuit is connected to the switch matrix network unit, a connection point between the second secondary-side circuit and the switch matrix network unit is the first connection point, and the other connection point between the second secondary-side circuit and the switch matrix network unit is the second connection point. A first terminal of the second secondary-side winding and the first terminal of the first primary-side winding are a group of dotted terminals. The second connection point is connected to the first terminal of the first secondary-side winding.

Correspondingly, when a voltage difference between the first connection point and the second connection point is less than zero, the second control signal is specifically used to turn on the fifth switch unit, and alternately turn on the fourth switch unit and the third switch unit.

In some implementations, the second equalization unit further includes a sixth switch unit, and the transformer further includes a second primary-side winding. The sixth switch unit and the second primary-side winding are connected in series to form a second primary-side circuit. The second primary-side circuit is connected to the second port. When the second primary-side circuit forms a loop with the power supply through the second port, a first terminal of the second primary-side winding is connected to a negative electrode of the power supply. The first terminal of a second primary-side circuit and the first terminal of the first secondary-side circuit are a group of dotted terminals.

Correspondingly, when a voltage difference between the first connection point and the second connection point is less than zero, the second control signal is specifically used to turn on the second switch unit, and alternately turn on the first switch unit and the sixth switch unit.

In some implementations, the first equalization unit includes a seventh switch unit and a resistor unit, the seventh switch unit and the resistor unit are connected in series, and the first equalization unit is connected to the switch matrix network unit.

Correspondingly, the first control signal is specifically used to turn on the seventh switch unit.

In some implementations, the control circuit apparatus further includes a voltage sampling circuit unit, and the voltage sampling circuit unit separately forms a loop with the m battery units through the switch matrix network unit.

The controller is further configured to send third control information to the control circuit apparatus, where the third control signal is used to control the switch matrix network unit to connect a to-be-sampled battery unit in the m battery units to the voltage sampling circuit, so that the voltage sampling circuit unit samples the to-be-sampled battery unit, to obtain a voltage value of the to-be-sampled battery unit.

In some implementations, the control circuit apparatus further includes a capacitor control unit, the capacitor control unit includes a capacitor and an eighth switch unit, the capacitor and the eighth switch unit are connected in series, and the capacitor control unit and the second equalization unit are connected in parallel.

The controller is further configured to: output a fourth control signal to the control circuit apparatus when the to-be-sampled battery unit in the m battery units needs to be sampled, where the fourth control signal is used to control the eighth unit to be turned off; and output a fifth control signal to the control circuit apparatus when the to-be-charged battery unit needs to be charged, where the fifth control signal is used to control the eighth unit to be turned on.

### BRIEF DESCRIPTION OF DRAWINGS

The accompanying drawings herein are incorporated into the specification and constitute a part of the specification, show embodiments conforming to this application, and are used together with the specification to explain a principle of this application.
FIG. 1 is a schematic diagram of a scenario of a battery system to which an embodiment of this application is applicable;
FIG. 2 is a schematic diagram of a structure of an equalization circuit;
FIG. 3 is a schematic diagram of a control circuit apparatus of a battery system not covered by the present invention;
FIG. 4 is an example diagram of a structure of a second equalization not covered by the present invention;
FIG. 5 is an example diagram of a structure of a second equalization unit not covered by the present invention;
FIG. 6 is an example diagram of a structure of a second equalization unit not covered by the present invention;
FIG. 7 is an example diagram of a structure of a first equalization unit not covered by the present invention;
FIG. 8 is an example diagram of a structure of a seventh switch unit;
FIG. 9 is a schematic diagram of a control circuit apparatus of a battery system not covered by the present invention;
FIG. 10 is an example diagram of a structure of a voltage sampling circuit unit not covered by the present invention;
FIG. 11 is a schematic diagram of a control circuit apparatus of a battery system according to an embodiment of this application; and
FIG. 12 is a schematic diagram of a structure of a battery management system according to an embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

To understand the objectives, technical solutions, and advantages of this application more clearly, the following gives further descriptions with reference to the accompanying drawings. Clearly, the described embodiments are some but not all of embodiments of this application. All other embodiments obtained based on embodiments in this application fall within the protection scope of this application.

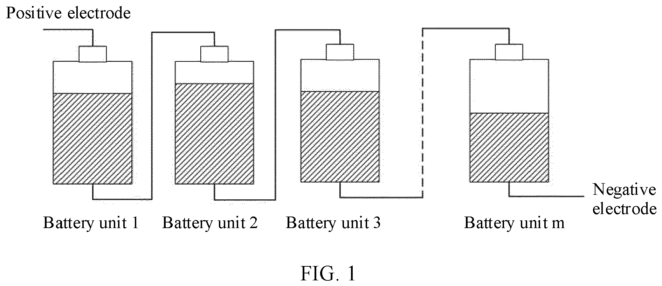

FIG. 1 is a schematic diagram of a scenario of a battery system to which an embodiment of this application is applicable. As shown in FIG. 1, the battery system includes m battery units: a battery unit 1, a battery unit 2, a battery unit 3, ..., and a battery unit m. The m battery units are connected in series to form a battery group, and m is a positive integer.

In actual application, voltages and capacities of the plurality of battery units are usually not completely the same, and there is a specific error in the voltages and the capacities between the plurality of battery units. It is assumed that the battery unit 2 is a large-capacity battery unit, and the battery unit m is a small-capacity battery unit. In a process in which the battery system discharges externally, after power of the battery unit m is fully discharged, discharging on another battery unit stops. As a result, remaining power of the another battery unit in the battery group cannot be completely discharged. In a process of charging the battery system, after power of the battery unit 2 is fully charged, charging on the another battery unit stops. As a result, power of the another battery unit in the battery group is not fully charged. As a quantity of charging and discharging times increases, a capacity difference between all the m battery units increases. As a result, the entire battery group fails prematurely. Therefore, voltages of the m battery units need to be equalized.

For example, when the power of the battery unit m is lower than the power of the another battery unit, the battery unit m may be additionally charged, to increase the power of the battery unit m. In this way, the power of the battery unit m is equalized with the power of the another battery unit.

For another example, when the power of the battery unit 2 is higher than the power of the another battery unit, the battery unit 2 may be additionally discharged, to reduce the power of the battery unit 2. In this way, the power of the battery unit 2 is equalized with the power of the another battery unit.

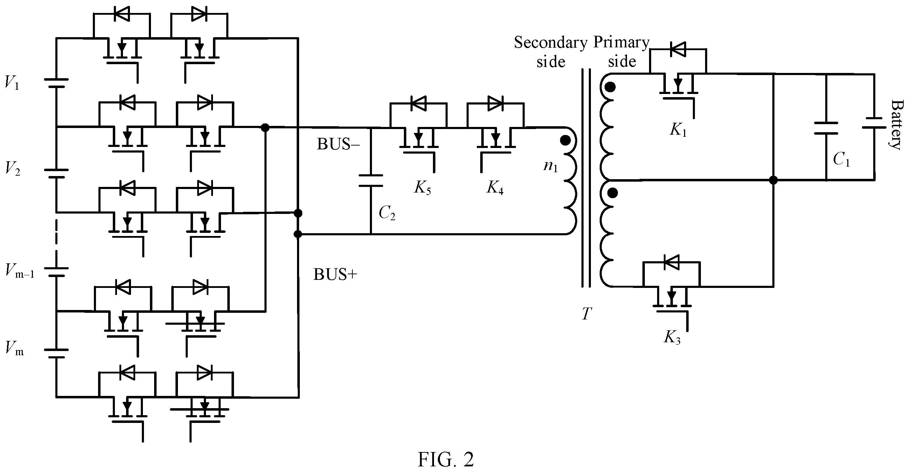

FIG. 2 is a schematic diagram of a structure of an equalization circuit. As shown in FIG. 2, when a voltage of a cell of a battery is high, the cell is connected to a first busbar (namely, BUS-) and a second busbar (namely, BUS+). When a voltage between the second busbar and the first busbar is greater than zero, a driving circuit of the equalization circuit controls K₃ to be turned off, and controls K₁, K₄ and K₅ to be switched between on and off. In this way, energy in the cell may be transferred to a battery, to reduce the voltage of the cell. When the voltage between the second busbar and the first busbar is less than zero, the driving circuit of the equalization circuit controls K₁ to be turned off, and controls K₃, K₄ and K₅ to be switched between on and off. In this way, the energy in the cell may be transferred to the battery, to reduce the voltage of the cell.

When a voltage of a cell of a battery is low, the cell is connected to the first busbar and the second busbar. When the voltage between the second busbar and the first busbar is less than zero, the driving circuit of the equalization circuit controls K₁ to be turned off, and controls K₃, K₄ and K₅ to be switched between on and off. In this way, the energy in the battery may be transferred to the cell, to increase the voltage of the cell. When the voltage between the second busbar and the first busbar is greater than zero, the driving circuit of the equalization circuit controls K₃ to be turned off, and controls K₁, K₄ and K₅ to be switched between on and off. In this way, the energy in the battery may be transferred to the cell, to increase the voltage of the cell.

However, because the equalization circuit implements low-voltage equalization and high-voltage equalization by turning off and on a large quantity of switching transistors, not only the equalization circuit has a complex structure, but also it is complex to drive the equalization circuit.

To resolve the foregoing problems, this application provides a new equalization solution. According to the equalization solution provided in this application, driving complexity of the equalization circuit can be reduced, and complexity of the equalization circuit can be further reduced.

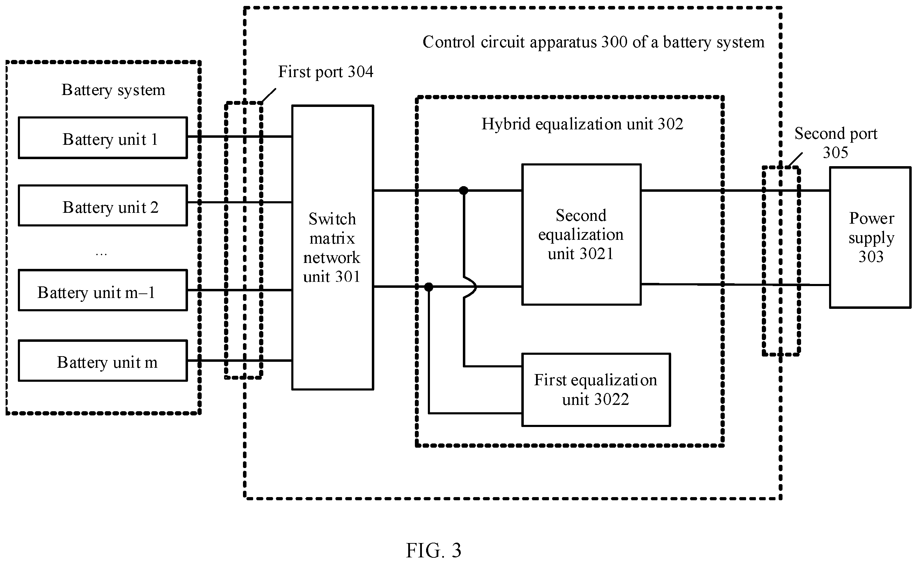

FIG. 3 is a schematic diagram of a control circuit apparatus 300 of a battery system not covered by the present invention. As shown in FIG. 3, the battery system includes m battery units: a battery unit 1, a battery unit 2, ..., a battery unit m-1, and a battery unit m.

The control circuit apparatus 300 of the battery system may include a switch matrix network unit 301, a second equalization unit 3021, a first equalization unit 3022, a first port 304, and a second port 305. The second equalization unit 3021 and the first equalization unit 3022 may be referred to as a hybrid equalization unit 302.

The first port 304, the switch matrix network unit 301, the second equalization unit 3021, and the second port 305 are sequentially connected, and the second equalization unit 3021 and the first equalization unit 3022 are connected in parallel.

The first port 304 may be configured to connect the m battery units, and the second port 305 is configured to connect a power supply 303. The power supply 303 may be a power supply different from the battery system, or may be the battery system.

The switch matrix network unit 301 may be configured to connect a to-be-discharged battery unit in the m battery units to the first equalization unit 3022.

The to-be-discharged battery unit is a high-voltage battery unit or a large-capacity battery unit in the m battery units. For example, when a voltage value of a battery unit is greater than voltage values of the other (m-1) battery units, and a voltage difference between the battery unit and the other (m-1) battery units exceeds a preset threshold, the battery unit is the to-be-discharged battery unit. In this case, a voltage of the to-be-discharged battery unit is excessively high. Therefore, voltage step-down needs to be performed to equalize the voltage of the to-be-discharged battery unit.

The to-be-discharged battery unit is connected to the first equalization unit 3022, a current path is formed between the to-be-discharged battery unit and the first equalization unit 3022, and a current in the to-be-discharged battery unit can flow to the first equalization unit 3022.

The switch matrix network unit 301 may be further configured to connect a to-be-charged battery unit in the m battery units to the second equalization unit 3021.

The to-be-charged battery unit is a low-voltage battery unit or a small-capacity battery unit in the m battery units. For example, when a voltage value of a battery unit in the m battery units is less than voltage values of the other (m-1) battery units, and a voltage difference between the battery unit and the other (m-1) battery units exceeds a preset threshold, the battery unit is the to-be-charged battery unit. In this case, a voltage of the to-be-charged battery unit is excessively low. Therefore, voltage step-up needs to be performed to equalize the voltage of the to-be-charged battery unit.

The to-be-charged battery unit is connected to the first equalization unit 3022, a current path is formed between the to-be-charged battery unit and the second equalization unit 3021, and a current output by the second equalization unit 3021 can flow to the to-be-charged battery unit.

The first equalization unit 3022 is configured to discharge the to-be-discharged battery unit through a resistor unit. In other words, the first equalization unit 3022 consumes, through the resistor unit, power output by the to-be-discharged battery unit.

The second equalization unit 3021 is configured to charge the to-be-charged battery unit through the power supply 303. In other words, the second equalization unit 3021 transmits power in the power supply 303 to the to-be-charged battery unit, to charge the to-be-charged battery unit.

The following describes example structures of the second equalization unit 3021 and the first equalization unit 3022 in the hybrid equalization unit in this application.

It should be noted that in this embodiment of this application, that two units may be directly connected, or may be indirectly connected by using another unit.

A first unit in the two units may be any electronic component or an electronic unit formed by any quantity of electronic components, and a second unit in the two units may be any electronic component or an electronic unit or a connection point or a port formed by any quantity of electronic components.

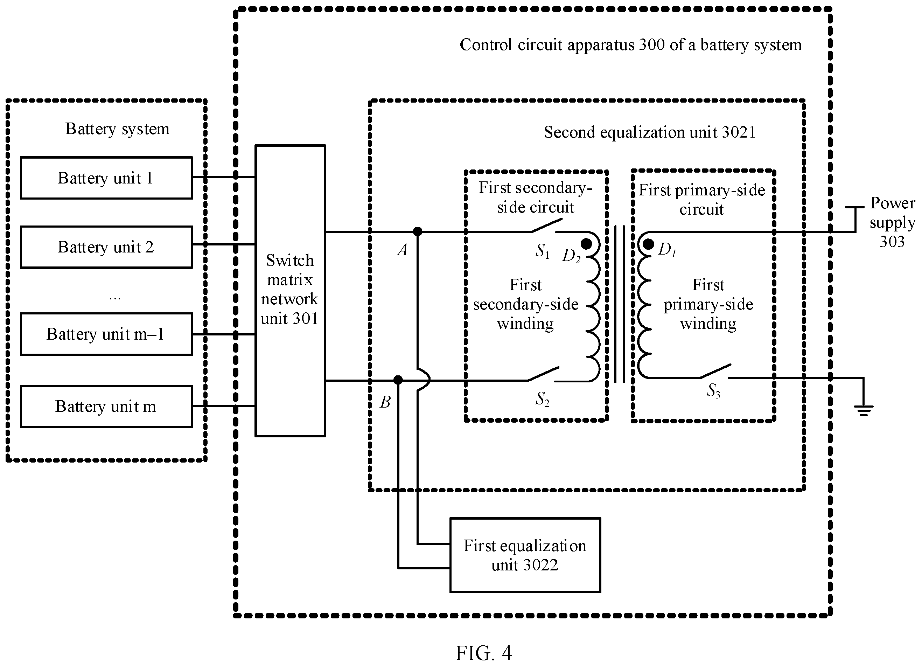

FIG. 4 is an example diagram of a structure of the second equalization unit not covered by the present invention. As shown in FIG. 4, the second equalization unit 3021 may include a transformer, a first switch unit, a second switch unit, and a third switch unit. The transformer includes a first primary-side winding and a first secondary-side winding.

A connection point between the second equalization unit 3021 and the switch matrix network unit includes a first connection point and a second connection point.

In an example, the first connection point may be a node A, and the second connection point may be a node B. When the node A is connected to a positive electrode of the to-be-charged battery unit, and the node B is connected to a negative electrode of the to-be-charged battery unit, a voltage value of the first connection point is greater than a voltage value of the second connection point. When the node A is connected to the negative electrode of the to-be-charged battery unit, and the node B is connected to the positive electrode of the to-be-charged battery unit, the voltage value of the first connection point is less than the voltage value of the second connection point.

In another example, the first connection point may be a node B, and the second connection point may be a node A. When the node A is connected to a positive electrode of the to-be-charged battery unit, and the node B is connected to a negative electrode of the to-be-charged battery unit, a voltage value of the first connection point is less than a voltage value of the second connection point. When the node A is connected to the negative electrode of the to-be-charged battery unit, and the node B is connected to the positive electrode of the to-be-charged battery unit, the voltage value of the first connection point is greater than the voltage value of the second connection point.

It may be understood that, in the foregoing two examples, manners for charging the to-be-charged battery unit by using the second equalization unit are the same. In this application, an example in which the first connection point is the node A and the second connection point is the node B is used for description.

In this embodiment, in an example, the first switch unit may be S₁, the second switch unit may be S₂, and the third switch unit may be S₃. In another example, the first switch unit may be S₂, the second switch unit may be S₁, and the third switch unit may be S₃.

The first primary-side winding and the third switch unit are connected in series to form a first primary-side circuit. A first terminal of the first primary-side winding of the transformer in the first primary-side circuit is connected to a positive electrode of the power supply, the first primary-side circuit is connected to the second port, and the first primary-side circuit may form a loop with the power supply 303 through the second port. It should be noted that the first terminal of the first primary-side winding of the transformer herein is one terminal corresponding to D₁ in the first primary-side winding of the transformer shown in FIG. 4.

The first switch unit, the first secondary-side winding, and the second switch unit are sequentially connected in series to form a first secondary-side circuit. The first connection point, the first secondary-side circuit, and the second connection point are sequentially connected in series. A first terminal of the first secondary-side winding is connected to the first connection point. The first terminal of the first secondary-side winding and the first terminal of the first primary-side winding are a group of dotted terminals. It should be noted that the first terminal of the first secondary-side winding of the transformer herein is one terminal corresponding to D₂ in the first secondary-side winding of the transformer shown in FIG. 4.

In this embodiment, the first secondary-side circuit is connected to the first connection point and the second connection point, and may separately form a loop with the m battery units through the switch matrix network unit 301.

In this embodiment, the second equalization unit may be configured to: connect a circuit between the to-be-charged battery unit and the first connection point and the second connection point through the switch matrix network unit 301; and when the voltage of the first connection point is greater than the voltage of the second connection point (that is, V_{AB} > 0), turn on the second switch unit, and alternately turn on the first switch unit and the third switch unit. In this way, the power supply 303 charges the to-be-charged battery unit by using the first primary-side winding and the first secondary-side winding.

That the first switch unit and the third switch unit are alternately turned on may be understood as: States of the first switch unit and the third switch unit are switched between on and off. To be specific, the first switch unit is turned off when the third switch unit is turned on, or the first switch unit is turned on when the third switch unit is turned off.

In an example, when the to-be-charged battery unit needs to be charged, and the voltage of the first connection point is greater than the voltage of the second connection point (that is, V_{AB} > 0), a driving circuit of the switch matrix network unit 301 controls switch units between the to-be-charged battery unit and the first connection point and the second connection point to be turned on, and a driving circuit of the second equalization unit 3021 controls the second switch unit to be turned on, and controls the first switch unit and the third switch unit to be turned on alternately. In this way, when the third switch unit is turned on, and the first switch unit is turned off, the power supply 303 charges the first primary-side winding; and when the first switch unit is turned on, and the third switch unit is turned off, the first secondary-side winding charges the to-be-charged battery unit. Therefore, low-voltage equalization on the to-be-charged battery unit is implemented.

In some possible implementations, the first switch unit may include a first MOS transistor, and the first MOS transistor is connected to the first connection point through a drain.

In some possible implementations, the second switch unit may include a first diode, and a positive electrode of the first diode is connected to the first connection point.

In some possible implementations, the third switch unit may include a second MOS transistor, and a drain of the second MOS transistor is connected to a positive electrode of the power supply 303 through the second port.

It may be understood that, when a plurality of to-be-charged battery units in the m battery units need to be charged, and the voltage of the first connection point is greater than the voltage of the second connection point (that is, V_{AB} > 0), the driving circuit of the switch matrix network unit 301 may sequentially drive switch units connected to two ends of each to-be-charged battery unit in the switch matrix network unit 301 to be turned on, and drive other switch units in the switch matrix network unit 301 to be turned off. In this way, the plurality of to-be-charged battery units are sequentially connected to the first secondary-side circuit in the second equalization unit 3021, and these to-be-charged battery units are sequentially discharged by using the first secondary-side circuit in the second equalization unit 3021. Therefore, low-voltage equalization is implemented.

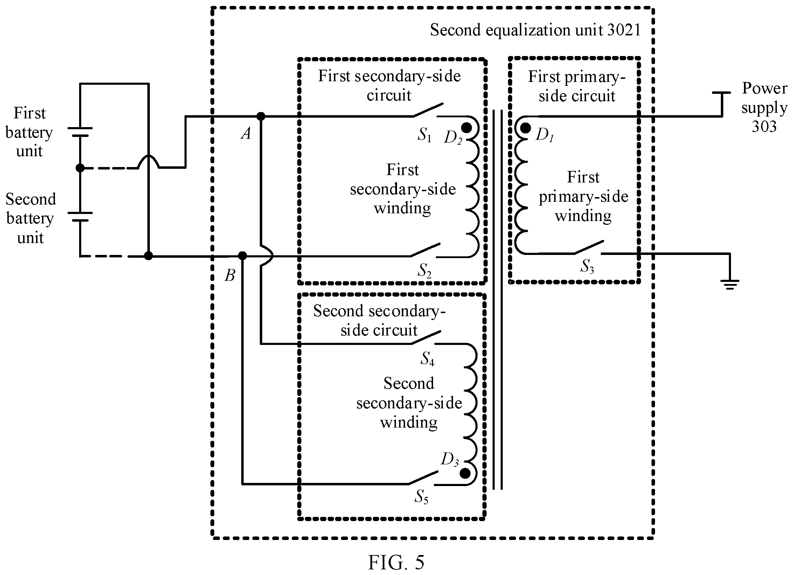

FIG. 5 is an example diagram of a structure of the second equalization unit not covered by the present invention. As shown in FIG. 5, the second equalization unit 3021 may further include a fourth switch unit and a fifth switch unit, and the transformer in the second equalization unit 3021 may further include a second secondary-side winding.

In this embodiment, in an example, the fourth switch unit may be S₄, and the fifth switch unit may be S₅. In another example, the fourth switch unit may be S₅, and the fifth switch unit may be S₄.

The fourth switch unit, the second secondary-side winding, and the fifth switch unit are sequentially connected in series to form a second secondary-side circuit. The first connection point, the second secondary-side circuit, and the second connection point are sequentially connected in series. A first terminal of the second secondary-side winding is connected to the second connection point. The first terminal of the second secondary-side winding and the first terminal of the first primary-side winding are a group of dotted terminals. It should be noted that the first terminal of the second secondary-side winding of the transformer herein is one terminal corresponding to D₃ in the second secondary-side winding of the transformer shown in FIG. 5.

In this embodiment, the second secondary-side circuit is connected to the first connection point and the second connection point, and may separately form a loop with the m battery units through the switch matrix network unit 301.

In this embodiment, the second equalization unit may be configured to: connect the to-be-charged battery unit to the first connection point and the second connection point through the switch matrix network unit 301; and when the to-be-charged battery unit needs to be charged, and the voltage of the first connection point is less than the voltage of the second connection point (that is, V_{AB} < 0), turn on the fifth switch unit, and alternately turn on the fourth switch unit and the third switch unit. In this way, the power supply 303 charges the to-be-charged battery unit by using the first primary-side winding and the second secondary-side winding.

That the fourth switch unit and the third switch unit are alternately turned on may be understood as: States of the fourth switch unit and the third switch unit are switched between on and off. To be specific, the fourth switch unit is turned off when the third switch unit is turned on, or the fourth switch unit is turned on when the third switch unit is turned off.

In an example, when the to-be-charged battery unit needs to be charged, and the voltage of the first connection point is less than the voltage of the second connection point (that is, V_{AB} < 0), the driving circuit of the switch matrix network unit 301 controls switch units between the to-be-charged battery unit and the first connection point and the second connection point to be turned on, and the driving circuit of the second equalization unit 3021 controls the fifth switch unit to be turned on, and controls the fourth switch unit and the third switch unit to be turned on alternately. In this way, when the third switch unit is turned on, and the fourth switch unit is turned off, the power supply charges the first primary-side winding; and when the fourth switch unit is turned on, and the third switch unit is turned off, the second secondary-side winding charges the to-be-charged battery unit. Therefore, low-voltage equalization on the to-be-charged battery unit is implemented.

In some possible implementations, the fourth switch unit may include a third MOS transistor, and a drain of the third MOS transistor is connected to the second connection point.

In some possible implementations, the fifth switch unit may include a second diode, and a positive electrode of the second diode is connected to the second connection point.

It may be understood that, when a plurality of to-be-charged battery units in the m battery units need to be charged, and the voltage of the first connection point is less than the voltage of the second connection point (that is, V_{AB} < 0), the driving circuit of the switch matrix network unit 301 may sequentially drive switch units connected to two ends of each to-be-charged battery unit in the switch matrix network unit 301 to be turned on, and drive other switch units in the switch matrix network unit 301 to be turned off. In this way, the plurality of to-be-charged battery units are sequentially connected to the second secondary-side circuit in the second equalization unit 3021, and these to-be-charged battery units are sequentially discharged by using the second secondary-side circuit in the second equalization unit 3021. Therefore, low-voltage equalization is implemented.

In this embodiment, it is assumed that the battery system may include a first battery unit and a second battery unit. A positive electrode of the first battery unit is connected to the second connection point, and a negative electrode of the first battery unit is connected to the first connection point. A positive electrode of the second battery unit is connected to the first connection point, and a negative electrode of the second battery unit is connected to the second connection point. In this case, when the first battery unit is the to-be-charged battery unit, the driving circuit of the switch matrix network unit 301 may drive switch units connected to two ends of the first battery unit to be turned on, and drive other switch units to be turned off. In this case, the voltage of the first connection point is less than the voltage of the second connection point (that is, V_{AB} < 0), and the first battery unit is charged by using the second secondary-side circuit and the first primary-side circuit. When the second battery unit is the to-be-charged battery unit, the driving circuit of the switch matrix network unit 301 may drive switch units connected to two ends of the second battery unit to be turned on, and drive other switch units to be turned off. In this case, the voltage of the first connection point is greater than the voltage of the second connection point (that is, V_{AB} > 0), and the first battery unit is charged by using the first secondary-side circuit and the first primary-side circuit.

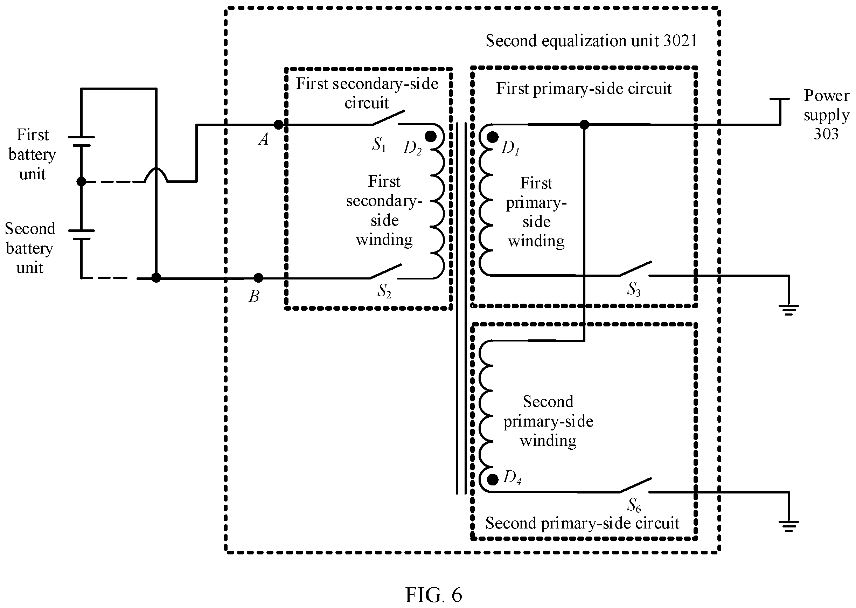

FIG. 6 is an example diagram of a structure of the second equalization unit not covered by the present invention.

As shown in FIG. 6, the second equalization unit 3021 may further include a sixth switch unit, and the transformer in the second equalization unit 3021 may further include a second primary-side winding.

In this embodiment, the sixth switch unit may be S₆.

The sixth switch unit and the second primary-side winding are connected in series to form a second primary-side circuit, the second primary-side circuit is connected to the second port, and the second primary-side circuit may form a loop with the power supply 303 through the second port. When the second primary-side circuit forms a loop with the power supply 303 through the second port, a first terminal of the second primary-side winding of the transformer is connected to a negative electrode of the power supply, and the first terminal of the second primary-side circuit and the first terminal of the first secondary-side circuit are a group of dotted terminals. It should be noted that the first terminal of the second primary-side winding of the transformer herein is one terminal corresponding to D₄ in the second primary-side winding of the transformer shown in FIG. 6.

In this embodiment, the second equalization unit may be configured to: connect the to-be-charged battery unit to the first connection point and the second connection point through the switch matrix network unit 301; and when the voltage of the first connection point is less than the voltage of the second connection point, turn on the second switch unit, and alternately turn on the first switch unit and the sixth switch unit. In this way, the power supply 303 charges the to-be-charged battery unit by using the second primary-side winding and the first secondary-side winding.

That the first switch unit and the sixth switch unit are alternately turned on may be understood as: States of the first switch unit and the sixth switch unit are switched between on and off. To be specific, the first switch unit is turned off when the sixth switch unit is turned on, or the first switch unit is turned on when the sixth switch unit is turned off.

In an example, when the to-be-charged battery unit needs to be charged, and the voltage of the first connection point is less than the voltage of the second connection point (that is, V_{AB} < 0), the driving circuit of the switch matrix network unit 301 controls switch units between the to-be-charged battery unit and the first connection point and the second connection point to be turned on, and the driving circuit of the second equalization unit 3021 controls the second switch unit to be turned on, and controls the first switch unit and the sixth switch unit to be turned on alternately. In this way, when the sixth switch unit is turned on, and the first switch unit is turned off, the power supply charges the second primary-side winding; and when the first switch unit is turned on, and the sixth switch unit is turned off, the first secondary-side winding charges the to-be-charged battery unit. Therefore, low-voltage equalization on the to-be-charged battery unit is implemented.

In some possible implementations, the sixth switch unit may include a fourth MOS transistor, and a drain of the fourth MOS transistor is connected to the positive electrode of the power supply 303 through the second port.

It may be understood that, when a plurality of to-be-charged battery units in the m battery units need to be charged, and the voltage of the first connection point is less than the voltage of the second connection point (that is, V_{AB} < 0), the driving circuit of the switch matrix network unit 301 may sequentially drive switch units connected to two ends of each to-be-charged battery unit in the switch matrix network unit 301 to be turned on, and drive other switch units in the switch matrix network unit 301 to be turned off. In this way, the plurality of to-be-charged battery units are sequentially connected to the first secondary-side circuit in the second equalization unit 3021, and these to-be-charged battery units are sequentially discharged by using the second primary-side circuit in the second equalization unit 3021. Therefore, low-voltage equalization is implemented.

In this embodiment, it is assumed that the battery system may include a first battery unit and a second battery unit. A positive electrode of the first battery unit is connected to the second connection point, and a negative electrode of the first battery unit is connected to the first connection point. A positive electrode of the second battery unit is connected to the first connection point, and a negative electrode of the second battery unit is connected to the second connection point. In this case, when the first battery unit is the to-be-charged battery unit, the driving circuit of the switch matrix network unit 301 may drive switch units connected to two ends of the first battery unit to be turned on, and drive other switch units to be turned off. In this case, the voltage of the first connection point is less than the voltage of the second connection point (that is, V_{AB} < 0), and the first battery unit is charged by using the second primary-side circuit and the first secondary-side winding. When the second battery unit is the to-be-charged battery unit, the driving circuit of the switch matrix network unit 301 may drive switch units connected to two ends of the second battery unit to be turned on, and drive other switch units to be turned off. In this case, the voltage of the first connection point is greater than the voltage of the second connection point (that is, V_{AB} > 0), and the first battery unit is charged by using the first primary-side circuit and the first secondary-side winding.

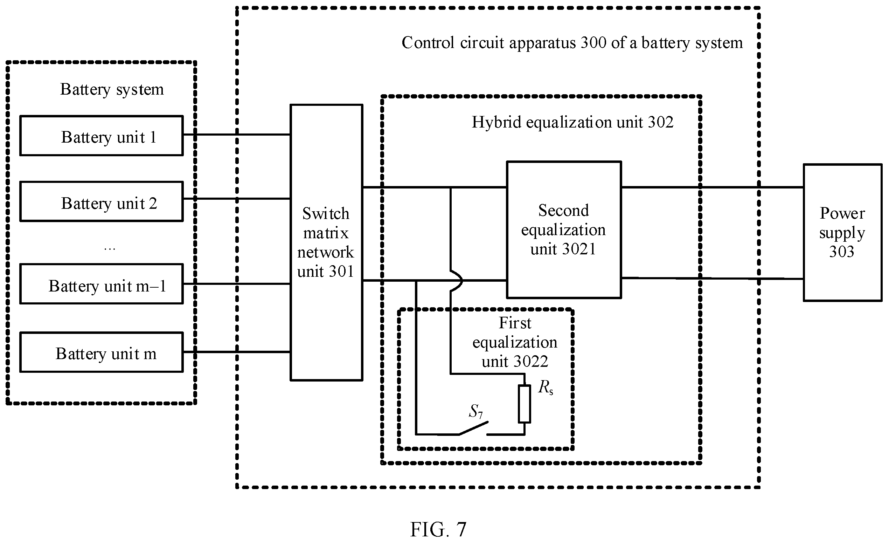

FIG. 7 is an example diagram of a structure of the first equalization unit not covered by the present invention. As shown in FIG. 7, the first equalization unit 3022 may include a seventh switch unit and a resistor unit, the seventh switch unit and the resistor unit are connected in series, and the first equalization unit 3022 is connected to the switch matrix network unit 301.

In this embodiment, the seventh switch unit may include S₇, and the resistor unit may include R_{S}.

The first equalization unit 3022 may be configured to turn on the seventh switch unit, to discharge the to-be-discharged battery unit through the resistor unit.

In an example, the driving circuit of the switch matrix network unit 301 controls switch units between the to-be-discharged battery unit and the first connection point and the second connection point to be turned on, and the driving circuit of the first equalization unit 3022 controls the seventh switch unit to be turned on, to conduct a loop between the resistor unit in the first equalization unit 3022 and the to-be-discharged battery unit. In this case, the resistor unit may consume redundant energy in the to-be-discharged battery unit, to equalize electric energy of the to-be-discharged battery unit.

For example, when a battery unit 1 is the to-be-discharged battery unit, the driving circuit of the switch matrix network unit 301 drives switch units connected to two ends of the battery unit 1 to be turned on, and drives other switch units to be turned off. In addition, the driving circuit of the first equalization unit 3022 drives the seventh switch unit to be turned on. In this way, excessive electric energy in the battery unit 1 may be consumed through the resistor unit. Therefore, high-voltage equalization on the battery system is implemented.

It may be understood that when there are a plurality of to-be-discharged battery units in the m battery units, the driving circuit of the switch matrix network unit 301 may sequentially drive switch units that are in the switch matrix network unit 301 and that are connected to two ends of each to-be-discharged battery unit to be turned on, and drive other switch units in the switch matrix network unit 301 to be turned off. In this way, the plurality of to-be-discharged battery units are sequentially connected to the first equalization unit 3022, and these to-be-discharged battery units are sequentially discharged by using the first equalization unit 3022. Therefore, high-voltage equalization is implemented.

In this embodiment, the seventh switch unit may include a fifth MOS transistor and a sixth MOS transistor. In an example, a source of the fifth MOS transistor is connected to a source of the sixth MOS transistor. In another example, a drain of the fifth MOS transistor is connected to a drain of the sixth MOS transistor.

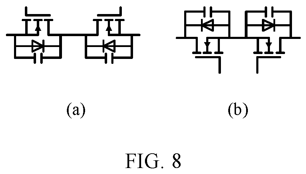

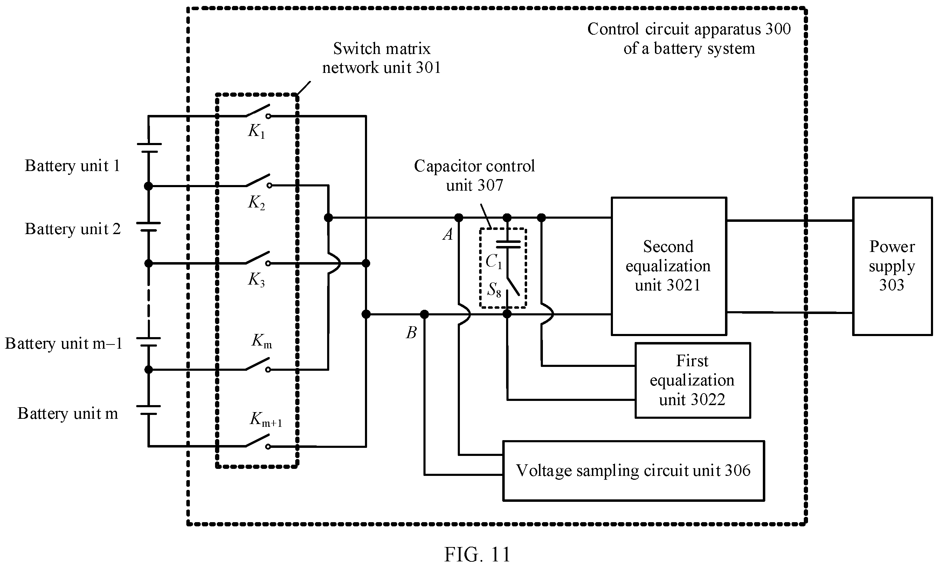

FIG. 8 is an example diagram of a structure of the seventh switch applicable in the embodiment of the present invention depicted in Fig. 11. As shown in FIG. 8, two MOS transistors in (a) are respectively the fifth MOS transistor and the sixth MOS transistor, and the drain of the fifth MOS transistor is connected to the drain of the sixth MOS transistor. Two MOS transistors in (b) are respectively the fifth MOS transistor and the sixth MOS transistor, and the source of the fifth MOS transistor is connected to the source of the sixth MOS transistor.

In this embodiment, the fifth MOS transistor and the sixth MOS transistor may be referred to as two top-to-top MOS transistors.

In the technical solution of this application, voltage equalization is implemented on the to-be-discharged battery unit by using the first equalization unit, and voltage equalization is implemented on the to-be-charged battery unit by using the second equalization unit. Therefore, the second equalization unit only needs to equalize a low-voltage battery unit. The second equalization unit needs to drive the first switch unit, the second switch unit, and the third switch unit to be in a turn-on state or a turn-off state, drive the fourth switch unit, the fifth switch unit, and the third switch unit to be in the turn-on state or the turn-off state, or drive the first switch unit, the second switch unit, and the sixth switch unit to be in the turn-on state or the turn-off state, and the first equalization unit only needs to drive the seventh switch unit to be in the turn-on state or the turn-off state. Compared with the conventional technology in which voltage equalization is performed by using a bidirectional equalization circuit for both a to-be-discharged battery unit and a to-be-charged battery unit, driving of the MOS transistor of the equalization circuit in this embodiment is simple.

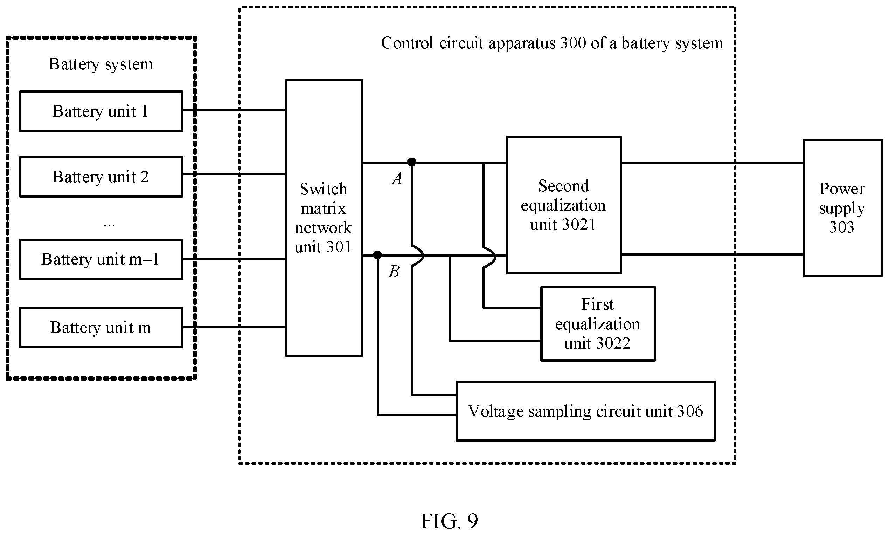

Optionally, FIG. 9 is a schematic diagram of the control circuit apparatus 300 of the battery system not covered by the present invention. As shown in FIG. 9, the control circuit apparatus 300 of the battery system may further include a voltage sampling circuit unit 306. The voltage sampling circuit unit 306 separately forms a loop with the m battery units through the switch matrix network unit 301. For example, terminals of the voltage sampling circuit unit 306 may be separately connected to the first connection point and the second connection point.

In this case, the switch matrix network unit 301 may be further configured to connect a to-be-sampled battery unit in the m battery units to the voltage sampling circuit unit 306, and the voltage sampling circuit unit 306 may be configured to perform voltage sampling on the to-be-sampled battery unit in the m battery units, to obtain a voltage value of the to-be-sampled battery unit, where the voltage value may be used to determine whether the to-be-sampled battery unit is the to-be-charged battery unit or the to-be-discharged battery unit.

For example, a battery unit 1 is the to-be-sampled battery unit. The driving circuit of the switch matrix network unit 301 controls a loop between the battery unit 1 and the voltage sampling circuit unit 304 to be conducted, to collect a voltage value of the battery unit 1 through the voltage sampling circuit unit 304.

It may be understood that each of the m battery units is connected to the battery sampling circuit unit 304 through the first connection point and the second connection point, to obtain a voltage value of each of the m battery units. Further, which battery units in the m battery units are to-be-charged battery units or to-be-discharged battery units may be determined based on the voltage value of each battery unit.

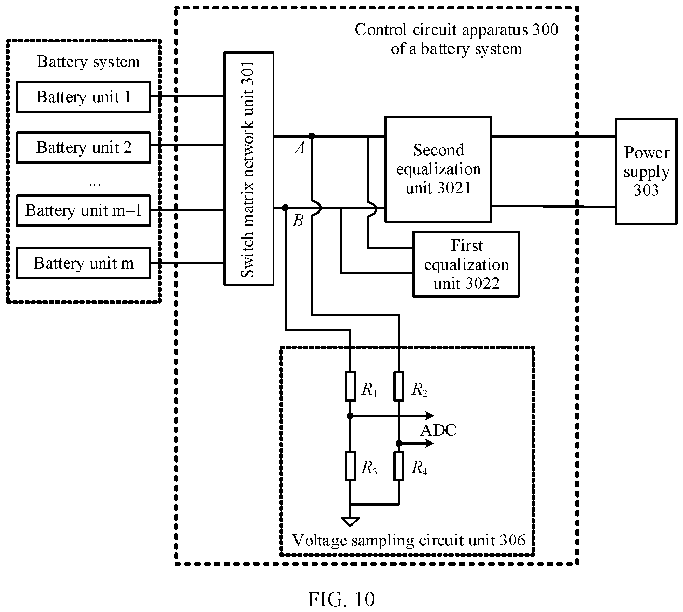

FIG. 10 is an example diagram of a structure of the voltage sampling circuit unit not covered by the present invention. As shown in FIG. 10, the voltage sampling circuit unit 306 may include four resistor units, and the four resistor units are respectively denoted as R₁, R₂, R₃, and R₄. The four resistor units may perform voltage division processing on a voltage of the to-be-sampled battery unit.

For ease of description, in this embodiment, the four resist units are respectively referred to as a first resistor, a second resistor, a third resistor, and a fourth resistor.

The first resistor and the third resistor are connected in series, one terminal of a circuit obtained through connecting the first resistor and the third resistor in series is connected to the second connection point, and the other terminal is grounded. The second resistor and the fourth resistor are connected in series, one terminal of a circuit obtained through connecting the second resistor and the fourth resistor in series is connected to the first connection point, and the other terminal is grounded.

The first port exists between the first resistor and the third resistor, and the second port exists between the second resistor and the fourth resistor. The first port and the second port are configured to output an electrical signal of the voltage value of the to-be-sampled battery unit to an analog-to-digital converter (analog-to-digital converter, ADC).

The ADC is configured to convert the electrical signal of the voltage value that is continuously changing into a discrete electrical signal in a digital form, to obtain a voltage value of a battery unit.

In an example, the first resistor, the second resistor, the third resistor, and the fourth resistor may each include one or more resistors.

FIG. 11 is a schematic diagram of the control circuit apparatus of the battery system according to an embodiment of this application. As shown in FIG. 11, the control circuit apparatus 300 of the battery system must further include a capacitor control unit 307. The capacitor control unit 307 must include a capacitor and an eighth switch unit, and the capacitor and the eighth switch unit are connected in series. In an example, the capacitor may be C₁, and the eighth switch unit may be S₈.

The capacitor control unit 307 must be configured to turn on the eighth switch unit when the to-be-charged battery unit in the m battery units needs to be charged, so that the capacitor may be connected to the circuit as a flyback output filter capacitor, to obtain a stable direct current. The capacitor control unit 307 must be configured to turn off the eighth switch unit when the to-be-sampled battery unit in the m battery units needs to be sampled, to avoid a sampling delay caused by connecting the capacitor, and improve accuracy of the voltage value of the to-be-sampled battery unit.

In this embodiment, the eighth switch unit may include a seventh MOS transistor and an eighth MOS transistor, and a source of the seventh MOS transistor is connected to a source of the eighth MOS transistor, or a drain of the seventh MOS transistor is connected to a drain of the eighth MOS transistor. The seventh MOS transistor and the eighth MOS transistor herein may be referred to as two top-to-top MOS transistors, and a connection manner between the seventh MOS transistor and the eighth MOS transistor is similar to a connection manner between the fifth MOS transistor and the sixth MOS transistor in the seventh switch unit shown in FIG. 8. Therefore, details are not described again.

In addition, this embodiment further provides an example structure of the switch matrix network unit 301. As shown in FIG. 11, the switch matrix network unit 301 may include m+1 switch units, and the m+1 switch units are respectively K₁, K₂, K₃, ..., Kₘ, and Kₘ₊₁. An i^{th} switch unit and a (i+1)^{th} switch unit in the m+1 switch units and an i^{th} battery unit in the m battery units are connected in series, one end of the i^{th} switch unit is connected to a positive electrode of the i^{th} battery unit, and one end of the (i+1)^{th} switch unit is connected to a negative electrode of the i^{th} battery unit, where i is an integer, and a value of i ranges from 1 to m.

The other end of an odd-numbered switch unit in the m+1 switch units is connected to the second connection point, and the other end of an even-numbered switch unit is connected to the first connection point.

In an example, a positive electrode and a negative electrode of the battery unit 1 are respectively connected to K₁ and K₂, and a positive electrode and a negative electrode of the battery unit 2 are respectively connected to K₂ and K₃. Similarly, a positive electrode and a negative electrode of the battery unit m are respectively connected to Kₘ and Kₘ₊₁.

The switch matrix network unit 301 may connect any battery unit in the m battery units to the first connection point and the second connection point through the m+1 switch units, or may switch a battery unit that is in the m battery units and that is connected to the first connection point and the second connection point.

Specifically, if a battery unit in the m battery units is used as a to-be-equalized battery unit, the driving circuit of the switch matrix network unit 301 drives switch units that are in the switch matrix network unit 301 and that are respectively connected to a positive electrode and a negative electrode of the to-be-equalized battery unit to be turned on, and drives other switch units in the switch matrix network unit 301 to be turned off, so that the to-be-equalized battery unit is connected to the hybrid equalization unit 302. The to-be-equalized battery unit includes the to-be-discharged battery unit or the to-be-charged battery unit.

When an odd-numbered battery unit is connected to the first connection point and the second connection point, a positive electrode of the odd-numbered battery unit is connected to the second connection point, and a negative electrode of the odd-numbered battery unit is connected to the first connection point. In this case, the voltage value of the second connection point is higher than the voltage value of the first connection point, that is, the voltage V_{AB} between the first connection point and the second connection point is less than 0.

For example, after K₁ and K₂ are turned on, when the battery unit 1 is connected to the first connection point and the second connection point, a positive electrode of the battery unit 1 is connected to the second connection point, and a negative electrode of the battery unit 1 is connected to the first connection point. In this case, the voltage value of the second connection point is higher than the voltage value of the first connection point, that is, the voltage V_{AB} between the first connection point and the second connection point is less than 0.

It may be understood that odd-numbered battery units in this embodiment may constitute the first battery unit shown in FIG. 5 or FIG. 6.

When an even-numbered battery unit is connected to the first connection point and the second connection point, a positive electrode of the battery unit is connected to the first connection point, and a negative electrode of the battery unit is connected to the second connection point. In this case, the voltage value of the first connection point is higher than the voltage value of the second connection point, that is, the voltage V_{AB} between the first connection point and the second connection point is greater than 0.

For example, after K₂ and K₃ are turned on, the battery unit 2 is connected to the first connection point and the second connection point. In this case, a positive electrode of the battery unit 2 is connected to the first connection point, a negative electrode of the battery unit 2 is connected to the second connection point, and the voltage value of the first connection point is higher than the voltage value of the second connection point, that is, the voltage V_{AB} between the first connection point and the second connection point is greater than 0.

It may be understood that even-numbered battery units in this embodiment may constitute the second battery unit shown in FIG. 5 or FIG. 6.

In an example, each of the m+1 switch units may include two top-to-top MOS transistors. For a structure of each of the m+1 switch units, refer to FIG. 8.

It may be understood that the diagram of the structure of the switch matrix network unit described in FIG. 11 is merely an example. The switch matrix network unit in this application may alternatively be implemented in another manner. Any switch matrix network unit that can separately connect each of the m battery units to the hybrid equalization unit 302 to form a loop and that can control on or off of a loop between each battery unit and the hybrid equalization unit 302 may fall into a protection scope of the switch matrix network unit in this application.

In the technical solution of this application, the resistor unit in the first equalization unit is configured to implement a voltage step-down function of a high-voltage battery unit, and the second equalization unit is configured to implement a voltage step-up function of a low-voltage battery unit. In other words, the second equalization unit only needs to equalize the low-voltage battery unit based on the power supply. Compared with an MOS transistor of a bidirectional equalization circuit in the conventional technology, the MOS transistor of the second equalization unit is simpler to drive. Therefore, according to the control circuit apparatus of the battery system provided in this application, driving complexity of the equalization circuit can be reduced.

This application further provides a battery management system. The battery management system may also be referred to as a battery nanny or a battery manager, and is mainly configured to: implement functions such as intelligent management and maintenance of each battery unit in the battery system, prevent overcharging and overdischarging of the battery, prolong a service life of the battery, and monitor a status of the battery.

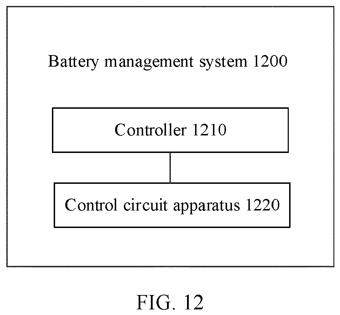

The present invention provides an embodiment of a battery management system comprising the control circuit apparatus according to an embodiment of the present invention (i.e. that of Fig. 11), the battery management system to be connected to a battery system. FIG. 12 is a schematic diagram of a structure of a battery management system according to an embodiment of this application. The battery management system includes a controller 1210 and a control circuit apparatus 1220 according to an embodiment of the present invention (i.e. Fig. 11). The control circuit apparatus 1220 is connected to the controller 1210.

In some implementations, the control circuit apparatus 1220 may include a first port, a switch matrix network unit, a first equalization unit, a second equalization unit, and a second port. The first port, the switch matrix network unit, the second equalization unit, and the second port are sequentially connected. The first equalization unit and the second equalization unit are connected in parallel.

Correspondingly, the controller 1210 may be configured to output a first control signal to the control circuit apparatus 1220, where the first control signal is used to control the switch matrix network unit to connect a to-be-discharged battery unit to the first equalization unit in the control circuit apparatus 1220, and is further used to control the first equalization unit to discharge the to-be-discharged battery unit through a resistor unit.

The control circuit apparatus 1220 may be configured to: receive the first control signal, connect the to-be-discharged battery unit and the first equalization unit through the switch matrix network unit under control of the first control signal, and discharge the to-be-discharged battery unit through the resistor unit under control of the first control signal.

The controller 1210 may be further configured to output a second control signal to the control circuit apparatus 1220, where the second control signal is used to control the switch matrix network unit to connect a to-be-charged battery unit to the second equalization unit in the control circuit apparatus 1220, and is further used to control the second equalization unit to charge the to-be-charged battery unit through a power supply.

The control circuit apparatus 1220 may be further configured to: receive the second control signal, connect the to-be-charged battery unit and the second equalization unit through switch matrix network unit under control of the second control signal, and charge the to-be-charged battery unit through the power supply under control of the second control signal.

In some implementations, the control circuit apparatus 1220 further includes a voltage sampling circuit unit, and the voltage sampling circuit unit separately forms a loop with m battery units in the foregoing battery system through the switch matrix network unit.

Correspondingly, the controller 1210 may be further configured to send third control information to the control circuit apparatus 1220, where the third control signal is used to control the switch matrix network unit to connect a to-be-sampled battery unit in the m battery units to the voltage sampling circuit, so that the voltage sampling circuit unit samples the to-be-sampled battery unit, to obtain a voltage value of the to-be-sampled battery unit.

In some implementations, the control circuit apparatus 1220 may further include a capacitor control unit, the capacitor control unit may include a capacitor and an eighth switch unit, the capacitor and the eighth switch unit are connected in series, and the capacitor control unit and the foregoing second equalization unit are connected in parallel.

Correspondingly, the controller 1210 may be further configured to: output a fourth control signal to the control circuit apparatus 1220 when the to-be-sampled battery unit in the m battery units needs to be sampled, where the fourth control signal is used to control the eighth unit to be turned off; and output a fifth control signal to the control circuit apparatus 1220 when the to-be-charged battery unit needs to be charged, where the fifth control signal is used to control the eighth unit to be turned on.

In an example, the control circuit apparatus 1220 may further include one or more of modules such as a display module, a wireless communication module, a battery group configured to supply power to a circuit module, and a collection module configured to collect battery information of the battery group. The controller 1210 is separately connected to the wireless communication module and the display module by using a communication interface. An output end of the collection module is connected to an input end of the controller 1210, an output end of the controller 1210 is connected to an input end of an equalization unit, and the equalization unit is connected to the battery group. The controller 1210 is connected to a server side by using the wireless communication module.

The controller 1210 may include a microcontroller unit (microcontroller unit, MCU). The MCU is also referred to as a single chip microcomputer (single chip microcomputer) or a single-chip microcomputer, and is used to appropriately reduce a frequency and specification of a central processing unit (central process unit, CPU), integrate a peripheral interface such as a memory (memory), a timer (timer), a universal serial bus (universal serial bus, USB), A/D conversion, a universal asynchronous transceiver (universal asynchronous receiver/transmitter, UART), a programmable logic controller (programmable logic controller, PLC), direct memory access (direct memory access, DMA), and even a liquid crystal display (liquid crystal display, LCD) driving circuit on a single chip to form a chip-level computer, and constitute combined control for the display module, the wireless communication module, the circuit module, and the collection module.

For example, the collection module in this application may include a battery voltage collection circuit, a battery current collection circuit, a battery temperature collection circuit, and the like.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment. The term "a plurality of" in this specification means two or more than two. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that connection manners of the positive and negative electrodes of the battery units, connection manners of the switch matrix network units, and connection manners between the circuit units in embodiments of this application are all simple examples, and are not intended to limit the scope of embodiments of this application.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A control circuit apparatus (300) of a battery system, wherein the battery system comprises m battery units (1, 2, m-1, m), and the m battery units (1, 2, m-1, m) are connected in series; the control circuit apparatus (300) comprises a first port (304), a switch matrix network unit (301), a first equalization unit (3022), a second equalization unit (3021), and a second port (305); the first port (304), the switch matrix network unit (301), the second equalization unit (3021), and the second port (305) are sequentially connected; and the first equalization unit (3022) and the second equalization unit (3021) are connected in parallel;
the first port (304) is configured to connect the m battery units (1, 2, m-1, m), and the second port (305) is configured to connect a power supply (303);
the switch matrix network unit (301) is configured to: connect a to-be-discharged battery unit (1, 2, m-1, m) in the m battery units (1, 2, m-1, m) to the first equalization unit (3022), and connect a to-be-charged battery unit (1, 2, m-1, m) in the m battery units (1, 2, m-1, m) to the second equalization unit (3021);
the first equalization unit (3022) is configured to discharge the to-be-discharged battery unit (1, 2, m-1, m) through a resistor unit; and
the second equalization unit (3021) is configured to charge the to-be-charged battery unit (1, 2, m-1, m) through the power supply,
wherein the battery system further comprises a voltage sampling circuit unit (306), and the voltage sampling circuit unit (306) separately forms a loop with the m battery units (1, 2, m-1, m) through the switch matrix network unit (301);
the switch matrix network unit (301) is further configured to connect a to-be-sampled battery unit (1, 2, m-1, m) in the m battery units (1, 2, m-1, m) to the voltage sampling circuit (306);
the voltage sampling circuit unit (306) is configured to sample the to-be-sampled battery unit (1, 2, m-1, m) to obtain a voltage value of the to-be-sampled battery unit (1, 2, m-1, m), wherein the voltage value is used to determine whether the to-be-sampled battery unit (1, 2, m-1, m) is the to-be-charged battery unit (1, 2, m-1, m) or the to-be-discharged battery unit (1, 2, m-1, m);
wherein the battery system further comprises a capacitor control unit (307), the capacitor control unit (307) comprises a capacitor and an eighth switch unit, and the capacitor and the eighth switch unit are connected in series;
the capacitor control unit (307) is configured to turn off the eigth switch when the to-be-sampled battery unit (1, 2, m-1, m) in the m battery units (1, 2, m-1, m) needs to be sampled, and to turn it on when the to-be-charged battery unit (1, 2, m-1, m) needs to be charged; and
the capacitor control unit (307) and the second equalization unit (3021) are connected in parallel.

2. The apparatus (300) according to claim 1, wherein the second equalization unit (3021) comprises a transformer, a first switch unit, a second switch unit, and a third switch unit, and the transformer comprises a first primary-side winding and a first secondary-side winding;
the first primary-side winding and the third switch unit are connected in series to form a first primary-side circuit, the first primary-side circuit is connected to the second port, and when the first primary-side circuit forms a loop with the power supply through the second port, a first terminal of the first primary-side winding is connected to a positive electrode of the power supply;
the first switch unit, the first secondary-side winding, and the second switch unit are sequentially connected in series to form a first secondary-side circuit, and the first secondary-side circuit is connected to the switch matrix network unit; and
the second equalization unit (3021) is configured to: when a voltage of a first connection point between the first secondary-side circuit and the switch matrix network unit is greater than a voltage of a second connection point between the first secondary-side circuit and the switch matrix network unit, turn on the second switch unit, and alternately turn on the first switch unit and the third switch unit, wherein the first connection point is connected to a first terminal of the first secondary-side winding, and the first terminal of the first secondary-side winding and the first terminal of the first primary-side winding are a group of dotted terminals.

3. The apparatus (300) according to claim 2, wherein the first switch unit comprises a first field-effect MOS transistor, and the first MOS transistor is connected to the first connection point through a drain.

4. The apparatus (300) according to claim 2 or 3, wherein the second switch unit comprises a first diode, and a positive electrode of the first diode is connected to the first connection point.

5. The apparatus (300) according to any one of claims 2 to 4, wherein the third switch unit comprises a second MOS transistor, and a drain of the second MOS transistor is connected to the positive electrode of the power supply through the second port.

6. The apparatus (300) according to claim 2, wherein the second equalization unit (3021) further comprises a fourth switch unit and a fifth switch unit, and the transformer further comprises a second secondary-side winding;
the fourth switch unit, the second secondary-side winding, and the fifth switch unit are sequentially connected in series to form a second secondary-side circuit; the second secondary-side circuit is connected to the switch matrix network unit, a connection point between the second secondary-side circuit and the switch matrix network unit is the first connection point, and the other connection point between the second secondary-side circuit and the switch matrix network unit is the second connection point; a first terminal of the second secondary-side winding and the first terminal of the first primary-side winding are a group of dotted terminals; and the second connection point is connected to the first terminal of the first secondary-side winding; and
the second equalization unit is further configured to: when a voltage difference between the first connection point and the second connection point is less than zero, turn on the fifth switch unit, and alternately turn on the fourth switch unit and the third switch unit.

7. The apparatus (300) according to claim 6, wherein the fourth switch unit comprises a third MOS transistor, and a drain of the third MOS transistor is connected to the second connection point.

8. The apparatus (300) according to claim 6 or 7, wherein the fifth switch unit comprises a second diode, and a positive electrode of the second diode is connected to the second connection point.

9. The apparatus (300) according to claim 2, wherein the second equalization unit (3021) further comprises a sixth switch unit, and the transformer further comprises a second primary-side winding;
the sixth switch unit and the second primary-side winding are connected in series to form a second primary-side circuit; the second primary-side circuit is connected to the second port; when the second primary-side circuit forms a loop with the power supply through the second port, a first terminal of the second primary-side winding is connected to a negative electrode of the power supply; and a first terminal of the second primary-side circuit and a first terminal of the first secondary-side circuit are a group of dotted terminals; and
the second equalization unit is further configured to: when a voltage difference between the first connection point and the second connection point is less than zero, turn on the second switch unit, and alternately turn on the first switch unit and the sixth switch unit.

10. The apparatus (300) according to claim 9, wherein the sixth switch unit comprises a fourth MOS transistor, and a drain of the fourth MOS transistor is connected to the positive electrode of the power supply through the second port.

11. The apparatus (300) according to any one of claims 1 to 10, wherein the first equalization unit comprises a seventh switch unit and the resistor unit, the seventh switch unit and the resistor unit are connected in series, and the first equalization unit is connected to the switch matrix network unit; and
the first equalization unit is configured to turn on the seventh switch unit.

12. The apparatus (300) according to claim 11, wherein the seventh switch unit comprises a fifth MOS transistor and a sixth MOS transistor; and a source of the fifth MOS transistor is connected to a source of the sixth MOS transistor, or a drain of the fifth MOS transistor is connected to a drain of the sixth MOS transistor.

13. The apparatus (300) according to any one of claims 1 to 12, wherein the apparatus further comprises a voltage sampling circuit unit, and the voltage sampling circuit unit separately forms a loop with the m battery units through the switch matrix network unit;
the switch matrix network unit is further configured to connect a to-be-sampled battery unit in the m battery units to the voltage sampling circuit; and
the voltage sampling circuit unit is configured to sample the to-be-sampled battery unit to obtain a voltage value of the to-be-sampled battery unit, wherein the voltage value is used to determine whether the to-be-sampled battery unit is the to-be-charged battery unit or the to-be-discharged battery unit.

14. The apparatus (300) according to claim 13, wherein the voltage sampling circuit unit comprises a first resistor, a second resistor, a third resistor, and a fourth resistor; the first resistor, the second resistor, the third resistor, and the fourth resistor are sequentially connected in series; an end connecting the third resistor and the fourth resistor is grounded; there is a third port between the first resistor and the third resistor, and there is a fourth port between the second resistor and the fourth resistor; and the third port and the fourth port are configured to output an electrical signal for determining the voltage value of the to-be-sampled battery unit.

15. A battery management system, wherein the battery management system is connected to a battery system, the battery management system comprises a controller and the control circuit apparatus (300) according to any one of claims 1 to 14, and the control circuit apparatus is connected to the controller;
the controller is configured to output a first control signal to the control circuit apparatus (300), wherein the first control signal is used to control the switch matrix network unit to connect a to-be-discharged battery unit to a first equalization unit in the control circuit apparatus, and is further used to control the first equalization unit to discharge the to-be-discharged battery unit through a resistor unit;
the control circuit apparatus (300) is configured to: receive the first control signal, connect the to-be-discharged battery unit and the first equalization unit through the switch matrix network unit under control of the first control signal, and discharge the to-be-discharged battery unit through the resistor unit under control of the first control signal;
the controller is further configured to output a second control signal to the control circuit apparatus, wherein the second control signal is used to control the switch matrix network unit to connect a to-be-charged battery unit to a second equalization unit in the control circuit apparatus, and is further used to control the second equalization unit to charge the to-be-charged battery unit through a power supply; and
the control circuit apparatus (300) is configured to: receive the second control signal, connect the to-be-charged battery unit and the second equalization unit through the switch matrix network unit under control of the second control signal, and charge the to-be-charged battery unit through the power supply under control of the second control signal.

## Patentansprüche

1. Steuerschaltungsvorrichtung (300) eines Batteriesystems, wobei das Batteriesystem m Batterieeinheiten (1, 2, m-1, m) umfasst und die m Batterieeinheiten (1, 2, m-1, m) in Reihe geschaltet sind; die Steuerschaltungsvorrichtung (300) einen ersten Anschluss (304), eine Schaltmatrix-Netzwerkeinheit (301), eine erste Ausgleichseinheit (3022), eine zweite Ausgleichseinheit (3021) und einen zweiten Anschluss (305) umfasst; der erste Anschluss (304), die Schaltmatrix-Netzwerkeinheit (301), die zweite Ausgleichseinheit (3021) und der zweite Anschluss (305) nacheinander geschaltet sind; und die erste Ausgleichseinheit (3022) und die zweite Ausgleichseinheit (3021) parallel geschaltet sind;
der erste Anschluss (304) dazu konfiguriert ist, die m Batterieeinheiten (1, 2, m-1, m) zu verbinden, und der zweite Anschluss (305) dazu konfiguriert ist, eine Stromversorgung (303) zu verbinden;
die Schaltmatrix-Netzwerkeinheit (301) zu Folgendem konfiguriert ist: Verbinden einer zu entladenden Batterieeinheit (1, 2, m-1, m) der m Batterieeinheiten (1, 2, m-1, m) mit der ersten Ausgleichseinheit (3022) und Verbinden einer zu ladenden Batterieeinheit (1, 2, m-1, m) der m Batterieeinheiten (1, 2, m-1, m) mit der zweiten Ausgleichseinheit (3021);
die erste Ausgleichseinheit (3022) dazu konfiguriert ist, die zu entladende Batterieeinheit (1, 2, m-1, m) über eine Widerstandseinheit zu entladen; und
die zweite Ausgleichseinheit (3021) dazu konfiguriert ist, die zu ladende Batterieeinheit (1, 2, m-1, m) über die Stromversorgung zu laden,
wobei das Batteriesystem ferner eine Spannungsabtastschaltungseinheit (306) umfasst und die Spannungsabtastschaltungseinheit (306) separat eine Schleife mit den m Batterieeinheiten (1, 2, m-1, m) über die Schaltmatrix-Netzwerkeinheit (301) bildet;
die Schaltmatrix-Netzwerkeinheit (301) ferner dazu konfiguriert ist, eine abzutastende Batterieeinheit (1, 2, m-1, m) in den m Batterieeinheiten (1, 2, m-1, m) mit der Spannungsabtastschaltung (306) zu verbinden;
die Spannungsabtastschaltungseinheit (306) dazu konfiguriert ist, die abzutastende Batterieeinheit (1, 2, m-1, m) abzutasten, um einen Spannungswert der abzutastenden Batterieeinheit (1, 2, m-1, m) zu erlangen, wobei der Spannungswert dazu verwendet wird, zu bestimmen, ob die abzutastende Batterieeinheit (1, 2, m-1, m) die zu ladende Batterieeinheit (1, 2, m-1, m) oder die zu entladende Batterieeinheit (1, 2, m-1, m) ist;
wobei das Batteriesystem ferner eine Kondensatorsteuereinheit (307) umfasst, die Kondensatorsteuereinheit (307) einen Kondensator und eine achte Schalteinheit umfasst und der Kondensator und die achte Schalteinheit in Reihe geschaltet sind;
die Kondensatorsteuereinheit (307) dazu konfiguriert ist, den achten Schalter auszuschalten, wenn die abzutastende Batterieeinheit (1, 2, m-1, m) in den m Batterieeinheiten (1, 2, m-1, m) abgetastet werden muss, und ihn einzuschalten, wenn die zu ladende Batterieeinheit (1, 2, m-1, m) geladen werden muss; und die Kondensatorsteuereinheit (307) und die zweite Ausgleichseinheit (3021) parallel geschaltet sind.

2. Vorrichtung (300) nach Anspruch 1, wobei die zweite Ausgleichseinheit (3021) einen Transformator, eine erste Schalteinheit, eine zweite Schalteinheit und eine dritte Schalteinheit umfasst und der Transformator eine erste primärseitige Wicklung und eine erste sekundärseitige Wicklung umfasst;
die erste primärseitige Wicklung und die dritte Schalteinheit in Reihe geschaltet sind, um eine erste primärseitige Schaltung zu bilden, die erste primärseitige Schaltung mit dem zweiten Anschluss verbunden ist, und, wenn die erste primärseitige Schaltung eine Schleife mit der Stromversorgung über den zweiten Anschluss bildet, eine erste Klemme der ersten primärseitigen Wicklung mit einer positiven Elektrode der Stromversorgung verbunden ist;
die erste Schalteinheit, die erste sekundärseitige Wicklung und die zweite Schalteinheit nacheinander in Reihe geschaltet sind, um eine erste sekundärseitige Schaltung zu bilden, und die erste sekundärseitige Schaltung mit der Schaltmatrix-Netzwerkeinheit verbunden ist; und
die zweite Ausgleichseinheit (3021) zu Folgendem konfiguriert ist: wenn eine Spannung eines ersten Verbindungspunkts zwischen der ersten sekundärseitigen Schaltung und der Schaltmatrix-Netzwerkeinheit größer als eine Spannung eines zweiten Verbindungspunkts zwischen der ersten sekundärseitigen Schaltung und der Schaltmatrix-Netzwerkeinheit ist, Einschalten der zweiten Schalteinheit und abwechselndes Einschalten der ersten Schalteinheit und der dritten Schalteinheit, wobei der erste Verbindungspunkt mit einer ersten Klemme der ersten sekundärseitigen Wicklung verbunden ist und die erste Klemme der ersten sekundärseitigen Wicklung und die erste Klemme der ersten primärseitigen Wicklung eine Gruppe von gepunkteten Klemmen sind.

3. Vorrichtung (300) nach Anspruch 2, wobei die erste Schalteinheit einen ersten Feldeffekt-MOS-Transistor umfasst und der erste MOS-Transistor mit dem ersten Verbindungspunkt über einen Drain verbunden ist.

4. Vorrichtung (300) nach Anspruch 2 oder 3, wobei die zweite Schalteinheit eine erste Diode umfasst und eine positive Elektrode der ersten Diode mit dem ersten Verbindungspunkt verbunden ist.

5. Vorrichtung (300) nach einem der Ansprüche 2 bis 4, wobei die dritte Schalteinheit einen zweiten MOS-Transistor umfasst und ein Drain des zweiten MOS-Transistors mit der positiven Elektrode der Stromversorgung über den zweiten Anschluss verbunden ist.

6. Vorrichtung (300) nach Anspruch 2, wobei die zweite Ausgleichseinheit (3021) ferner eine vierte Schalteinheit und eine fünfte Schalteinheit umfasst und der Transformator ferner eine zweite sekundärseitige Wicklung umfasst;
die vierte Schalteinheit, die zweite sekundärseitige Wicklung und die fünfte Schalteinheit nacheinander in Reihe geschaltet sind, um eine zweite sekundärseitige Schaltung zu bilden; die zweite sekundärseitige Schaltung mit der Schaltmatrix-Netzwerkeinheit verbunden ist, ein Verbindungspunkt zwischen der zweiten sekundärseitigen Schaltung und der Schaltmatrix-Netzwerkeinheit der erste Verbindungspunkt ist und der andere Verbindungspunkt zwischen der zweiten sekundärseitigen Schaltung und der Schaltmatrix-Netzwerkeinheit der zweite Verbindungspunkt ist; eine erste Klemme der zweiten sekundärseitigen Wicklung und die erste Klemme der ersten primärseitigen Wicklung eine Gruppe von gepunkteten Klemmen sind; und der zweite Verbindungspunkt mit der ersten Klemme der ersten sekundärseitigen Wicklung verbunden ist; und
die zweite Ausgleichseinheit ferner zu Folgendem konfiguriert ist: wenn eine Spannungsdifferenz zwischen dem ersten Verbindungspunkt und dem zweiten Verbindungspunkt kleiner als Null ist, Einschalten der fünften Schalteinheit und abwechselndes Einschalten der vierten Schalteinheit und der dritten Schalteinheit.

7. Vorrichtung (300) nach Anspruch 6, wobei die vierte Schalteinheit einen dritten MOS-Transistor umfasst und ein Drain des dritten MOS-Transistors mit dem zweiten Verbindungspunkt verbunden ist.

8. Vorrichtung (300) nach Anspruch 6 oder 7, wobei die fünfte Schalteinheit eine zweite Diode umfasst und eine positive Elektrode der zweiten Diode mit dem zweiten Verbindungspunkt verbunden ist.

9. Vorrichtung (300) nach Anspruch 2, wobei die zweite Ausgleichseinheit (3021) ferner eine sechste Schalteinheit umfasst und der Transformator ferner eine zweite primärseitige Wicklung umfasst;
die sechste Schalteinheit und die zweite primärseitige Wicklung in Reihe geschaltet sind, um eine zweite primärseitige Schaltung zu bilden; die zweite primärseitige Schaltung mit dem zweiten Anschluss verbunden ist; wenn die zweite primärseitige Schaltung eine Schleife mit der Stromversorgung über den zweiten Anschluss bildet, eine erste Klemme der zweiten primärseitigen Wicklung mit einer negativen Elektrode der Stromversorgung verbunden ist; und eine erste Klemme der zweiten primärseitigen Schaltung und eine erste Klemme der ersten sekundärseitigen Schaltung eine Gruppe von gepunkteten Klemmen sind; und
die zweite Ausgleichseinheit ferner zu Folgendem konfiguriert ist: wenn eine Spannungsdifferenz zwischen dem ersten Verbindungspunkt und dem zweiten Verbindungspunkt kleiner als Null ist, Einschalten der zweiten Schalteinheit und abwechselndes Einschalten der ersten Schalteinheit und der sechsten Schalteinheit.

10. Vorrichtung (300) nach Anspruch 9, wobei die sechste Schalteinheit einen vierten MOS-Transistor umfasst und ein Drain des vierten MOS-Transistors mit der positiven Elektrode der Stromversorgung über den zweiten Anschluss verbunden ist.

11. Vorrichtung (300) nach einem der Ansprüche 1 bis 10, wobei die erste Ausgleichseinheit eine siebte Schalteinheit und die Widerstandseinheit umfasst, die siebte Schalteinheit und die Widerstandseinheit in Reihe geschaltet sind und die erste Ausgleichseinheit mit der Schaltmatrix-Netzwerkeinheit verbunden ist; und
die erste Ausgleichseinheit dazu konfiguriert ist, die siebte Schalteinheit einzuschalten.

12. Vorrichtung (300) nach Anspruch 11, wobei die siebte Schalteinheit einen fünften MOS-Transistor und einen sechsten MOS-Transistor umfasst; und eine Quelle des fünften MOS-Transistors mit einer Quelle des sechsten MOS-Transistors verbunden ist oder ein Drain des fünften MOS-Transistors mit einem Drain des sechsten MOS-Transistors verbunden ist.

13. Vorrichtung (300) nach einem der Ansprüche 1 bis 12, wobei die Vorrichtung ferner eine Spannungsabtastschaltungseinheit umfasst und die Spannungsabtastschaltungseinheit separat eine Schleife mit den m Batterieeinheiten über die Schaltmatrix-Netzwerkeinheit bildet;
die Schaltmatrix-Netzwerkeinheit ferner dazu konfiguriert ist, eine abzutastende Batterieeinheit in den m Batterieeinheiten mit der Spannungsabtastschaltung zu verbinden; und
die Spannungsabtastschaltungseinheit dazu konfiguriert ist, die abzutastende Batterieeinheit abzutasten, um einen Spannungswert der abzutastenden Batterieeinheit zu erlangen, wobei der Spannungswert dazu verwendet wird, zu bestimmen, ob die abzutastende Batterieeinheit die zu ladende Batterieeinheit oder die zu entladende Batterieeinheit ist.

14. Vorrichtung (300) nach Anspruch 13, wobei die Spannungsabtastschaltungseinheit einen ersten Widerstand, einen zweiten Widerstand, einen dritten Widerstand und einen vierten Widerstand umfasst; der erste Widerstand, der zweite Widerstand, der dritte Widerstand und der vierte Widerstand nacheinander in Reihe geschaltet sind; ein Ende, das den dritten Widerstand und den vierten Widerstand verbindet, geerdet ist; zwischen dem ersten Widerstand und dem dritten Widerstand ein dritter Anschluss vorliegt und zwischen dem zweiten Widerstand und dem vierten Widerstand ein vierter Anschluss vorliegt; und der dritte Anschluss und der vierte Anschluss dazu konfiguriert sind, ein elektrisches Signal zum Bestimmen des Spannungswerts der abzutastenden Batterieeinheit auszugeben.

15. Batterieverwaltungssystem, wobei das Batterieverwaltungssystem mit einem Batteriesystem verbunden ist, das Batterieverwaltungssystem eine Steuerung und die Steuerschaltungsvorrichtung (300) nach einem der Ansprüche 1 bis 14 umfasst und die Steuerschaltungsvorrichtung mit der Steuerung verbunden ist; die Steuerung dazu konfiguriert ist, ein erstes Steuersignal an die Steuerschaltungsvorrichtung (300) auszugeben, wobei das erste Steuersignal dazu verwendet wird, die Schaltmatrix-Netzwerkeinheit zu steuern, um eine zu entladende Batterieeinheit mit einer ersten Ausgleichseinheit in der Steuerschaltungsvorrichtung zu verbinden, und ferner dazu verwendet wird, die erste Ausgleichseinheit zu steuern, um die zu entladende Batterieeinheit über eine Widerstandseinheit zu entladen;
die Steuerschaltungsvorrichtung (300) zu Folgendem konfiguriert ist: Empfangen des ersten Steuersignals, Verbinden der zu entladenden Batterieeinheit und der ersten Ausgleichseinheit über die Schaltmatrix-Netzwerkeinheit unter Steuerung des ersten Steuersignals und Entladen der zu entladenden Batterieeinheit über die Widerstandseinheit unter Steuerung des ersten Steuersignals;
die Steuerung ferner dazu konfiguriert ist, ein zweites Steuersignal an die Steuerschaltungsvorrichtung auszugeben, wobei das zweite Steuersignal dazu verwendet wird, die Schaltmatrix-Netzwerkeinheit zu steuern, um eine zu ladende Batterieeinheit mit einer zweiten Ausgleichseinheit in der Steuerschaltungsvorrichtung zu verbinden, und ferner dazu verwendet wird, die zweite Ausgleichseinheit zu steuern, um die zu ladende Batterieeinheit über eine Stromversorgung zu laden; und
die Steuerschaltungsvorrichtung (300) zu Folgendem konfiguriert ist: Empfangen des zweiten Steuersignals, Verbinden der zu ladenden Batterieeinheit und der zweiten Ausgleichseinheit über die Schaltmatrix-Netzwerkeinheit unter Steuerung des zweiten Steuersignals und Laden der zu ladenden Batterieeinheit über die Stromversorgung unter Steuerung des zweiten Steuersignals.

## Revendications

1. Appareil de circuit de commande (300) d'un système de batterie, dans lequel le système de batterie comprend m unités de batterie (1, 2, m-1, m), et les m unités de batterie (1, 2, m-1, m) sont connectées en série ; l'appareil de circuit de commande (300) comprend un premier port (304), une unité de réseau matriciel de commutation (301), une première unité d'égalisation (3022), une seconde unité d'égalisation (3021), et un deuxième port (305) ; le premier port (304), l'unité de réseau matriciel de commutation (301), la seconde unité d'égalisation (3021), et le deuxième port (305) sont connectés séquentiellement ; et la première unité d'égalisation (3022) et la seconde unité d'égalisation (3021) sont connectées en parallèle ;
le premier port (304) est configuré pour connecter les m unités de batterie (1, 2, m-1, m), et le deuxième port (305) est configuré pour connecter une alimentation électrique (303) ;
l'unité de réseau matriciel de commutation (301) est configurée pour : connecter une unité de batterie à décharger (1, 2, m-1, m) dans les m unités de batterie (1, 2, m-1, m) à la première unité d'égalisation (3022), et connecter une unité de batterie à charger (1, 2, m-1, m) dans les m unités de batterie (1, 2, m-1, m) à la seconde unité d'égalisation (3021) ;
la première unité d'égalisation (3022) est configurée pour décharger l'unité de batterie à décharger (1, 2, m-1, m) à travers une unité de résistance ; et
la seconde unité d'égalisation (3021) est configurée pour charger l'unité de batterie à charger (1, 2, m-1, m) à travers l'alimentation électrique,
dans lequel le système de batterie comprend également une unité de circuit d'échantillonnage de tension (306), et l'unité de circuit d'échantillonnage de tension (306) forme séparément une boucle avec les m unités de batterie (1, 2, m-1, m) à travers l'unité de réseau matriciel de commutation (301) ;
l'unité de réseau matriciel de commutation (301) est également configurée pour connecter une unité de batterie à échantillonner (1, 2, m-1, m) dans les m unités de batterie (1, 2, m-1, m) au circuit d'échantillonnage de tension (306) ;
l'unité de circuit d'échantillonnage de tension (306) est configurée pour échantillonner l'unité de batterie à échantillonner (1, 2, m-1, m) afin d'obtenir une valeur de tension de l'unité de batterie à échantillonner (1, 2, m-1, m), dans lequel la valeur de tension est utilisée pour déterminer si l'unité de batterie à échantillonner (1, 2, m-1, m) est l'unité de batterie à charger (1, 2, m-1, m) ou l'unité de batterie à décharger (1, 2, m-1, m) ;
dans lequel le système de batterie comprend également une unité de commande de condensateur (307), l'unité de commande de condensateur (307) comprend un condensateur et une huitième unité de commutation, et le condensateur et la huitième unité de commutation sont connectés en série ;
l'unité de commande de condensateur (307) est configurée pour désactiver le huitième commutateur lorsque l'unité de batterie à échantillonner (1, 2, m-1, m) dans les m unités de batterie (1, 2, m-1, m) doit être échantillonnée, et pour l'activer lorsque l'unité de batterie à charger (1, 2, m-1, m) doit être chargée ; et
l'unité de commande de condensateur (307) et la seconde unité d'égalisation (3021) sont connectées en parallèle.

2. Appareil (300) selon la revendication 1, dans lequel la seconde unité d'égalisation (3021) comprend un transformateur, une première unité de commutation, une deuxième unité de commutation, et une troisième unité de commutation, et le transformateur comprend un premier enroulement côté primaire et un premier enroulement côté secondaire ;
le premier enroulement côté primaire et la troisième unité de commutation sont connectés en série pour former un premier circuit côté primaire, le premier circuit côté primaire est connecté au deuxième port, et lorsque le premier circuit côté primaire forme une boucle avec l'alimentation électrique à travers le deuxième port, une première borne du premier enroulement côté primaire est connectée à une électrode positive de l'alimentation électrique ;
la première unité de commutation, le premier enroulement côté secondaire, et la deuxième unité de commutation sont connectés séquentiellement en série pour former un premier circuit côté secondaire, et le premier circuit côté secondaire est connecté à l'unité de réseau matriciel de commutation ; et
la seconde unité d'égalisation (3021) est configurée pour : lorsqu'une tension d'un premier point de connexion entre le premier circuit côté secondaire et l'unité de réseau matriciel de commutation est supérieure à une tension d'un second point de connexion entre le premier circuit côté secondaire et l'unité de réseau matriciel de commutation, activer la deuxième unité de commutation, et activer alternativement la première unité de commutation et la troisième unité de commutation, dans lequel le premier point de connexion est connecté à une première borne du premier enroulement côté secondaire, et la première borne du premier enroulement côté secondaire et la première borne du premier enroulement côté primaire sont un groupe de bornes en pointillés.

3. Appareil (300) selon la revendication 2, dans lequel la première unité de commutation comprend un premier transistor MOS à effet de champ, et le premier transistor MOS est connecté au premier point de connexion à travers un drain.

4. Appareil (300) selon la revendication 2 ou 3, dans lequel la deuxième unité de commutation comprend une première diode, et une électrode positive de la première diode est connectée au premier point de connexion.

5. Appareil (300) selon l'une quelconque des revendications 2 à 4, dans lequel la troisième unité de commutation comprend un deuxième transistor MOS, et un drain du deuxième transistor MOS est connecté à l'électrode positive de l'alimentation électrique à travers le deuxième port.

6. Appareil (300) selon la revendication 2, dans lequel la seconde unité d'égalisation (3021) comprend également une quatrième unité de commutation et une cinquième unité de commutation, et le transformateur comprend également un second enroulement côté secondaire ;
la quatrième unité de commutation, le second enroulement côté secondaire, et la cinquième unité de commutation sont connectés séquentiellement en série pour former un second circuit côté secondaire ; le second circuit côté secondaire est connecté à l'unité de réseau matriciel de commutation, un point de connexion entre le second circuit côté secondaire et l'unité de réseau matriciel de commutation est le premier point de connexion, et l'autre point de connexion entre le second circuit côté secondaire et l'unité de réseau matriciel de commutation est le second point de connexion ; une première borne du second enroulement côté secondaire et la première borne du premier enroulement côté primaire sont un groupe de bornes en pointillés ; et le second point de connexion est connecté à la première borne du premier enroulement côté secondaire ; et
la seconde unité d'égalisation est également configurée pour : lorsqu'une différence de tension entre le premier point de connexion et le second point de connexion est inférieure à zéro, activer la cinquième unité de commutation, et activer alternativement la quatrième unité de commutation et la troisième unité de commutation.

7. Appareil (300) selon la revendication 6, dans lequel la quatrième unité de commutation comprend un troisième transistor MOS, et un drain du troisième transistor MOS est connecté au second point de connexion.

8. Appareil (300) selon la revendication 6 ou 7, dans lequel la cinquième unité de commutation comprend une seconde diode, et une électrode positive de la seconde diode est connectée au second point de connexion.

9. Appareil (300) selon la revendication 2, dans lequel la seconde unité d'égalisation (3021) comprend également une sixième unité de commutation, et le transformateur comprend également un second enroulement côté secondaire ;
la sixième unité de commutation et le second enroulement côté primaire sont connectés en série pour former un second circuit côté primaire ; le second circuit côté primaire est connecté au deuxième port ; lorsque le second circuit côté primaire forme une boucle avec l'alimentation électrique à travers le deuxième port, une première borne du second enroulement côté primaire est connectée à une électrode négative de l'alimentation électrique ; et une première borne du second circuit côté primaire et une première borne du premier circuit côté secondaire sont un groupe de bornes en pointillés ; et
la seconde unité d'égalisation est également configurée pour : lorsqu'une différence de tension entre le premier point de connexion et le second point de connexion est inférieure à zéro, activer la deuxième unité de commutation, et activer alternativement la première unité de commutation et la sixième unité de commutation.

10. Appareil (300) selon la revendication 9, dans lequel la sixième unité de commutation comprend un quatrième transistor MOS, et un drain du quatrième transistor MOS est connecté à l'électrode positive de l'alimentation électrique à travers le deuxième port.

11. Appareil (300) selon l'une quelconque des revendications 1 à 10, dans lequel la première unité d'égalisation comprend une septième unité de commutation et l'unité de résistance, la septième unité de commutation et l'unité de résistance sont connectées en série, et la première unité d'égalisation est connectée à l'unité de réseau matriciel de commutation ; et
la première unité d'égalisation est configurée pour activer la septième unité de commutation.

12. Appareil (300) selon la revendication 11, dans lequel la septième unité de commutation comprend un cinquième transistor MOS et un sixième transistor MOS ; et une source du cinquième transistor MOS est connectée à une source du sixième transistor MOS, ou un drain du cinquième transistor MOS est connecté à un drain du sixième transistor MOS.

13. Appareil (300) selon l'une quelconque des revendications 1 à 12, dans lequel l'appareil comprend également une unité de circuit d'échantillonnage de tension, et l'unité de circuit d'échantillonnage de tension forme séparément une boucle avec les m unités de batterie à travers l'unité de réseau matriciel de commutation ;
l'unité de réseau matriciel de commutation est également configurée pour connecter une unité de batterie à échantillonner dans les m unités de batterie au circuit d'échantillonnage de tension ; et
l'unité de circuit d'échantillonnage de tension est configurée pour échantillonner l'unité de batterie à échantillonner afin d'obtenir une valeur de tension de l'unité de batterie à échantillonner, dans lequel la valeur de tension est utilisée pour déterminer si l'unité de batterie à échantillonner est l'unité de batterie à charger ou l'unité de batterie à décharger.

14. Appareil (300) selon la revendication 13, dans lequel l'unité de circuit d'échantillonnage de tension comprend une première résistance, une deuxième résistance, une troisième résistance, et une quatrième résistance ; la première résistance, la deuxième résistance, la troisième résistance, et la quatrième résistance sont connectées séquentiellement en série ; une extrémité connectant la troisième résistance et la quatrième résistance est mise à la terre ; il y a un troisième port entre la première résistance et la troisième résistance, et il y a un quatrième port entre la deuxième résistance et la quatrième résistance ; et le troisième port et le quatrième port sont configurés pour émettre un signal électrique pour déterminer la valeur de tension de l'unité de batterie à échantillonner.

15. Système de gestion de batterie, dans lequel le système de gestion de batterie est connecté à un système de batterie, le système de gestion de batterie comprend un dispositif de commande et l'appareil de circuit de commande (300) selon l'une quelconque des revendications 1 à 14, et l'appareil de circuit de commande est connecté au dispositif de commande ;
le dispositif de commande est configuré pour émettre un premier signal de commande vers l'appareil de circuit de commande (300), dans lequel le premier signal de commande est utilisé pour commander l'unité de réseau matriciel de commutation afin de connecter une unité de batterie à décharger à une première unité d'égalisation dans l'appareil de circuit de commande, et est également utilisé pour commander la première unité d'égalisation afin de décharger l'unité de batterie à décharger à travers une unité de résistance ;
l'appareil de circuit de commande (300) est configuré pour : recevoir le premier signal de commande, connecter l'unité de batterie à décharger et la première unité d'égalisation à travers l'unité de réseau matriciel de commutation sous la commande du premier signal de commande, et décharger l'unité de batterie à décharger à travers l'unité de résistance sous la commande du premier signal de commande ;
le dispositif de commande est également configuré pour émettre un second signal de commande vers l'appareil de circuit de commande, dans lequel le second signal de commande est utilisé pour commander l'unité de réseau matriciel de commutation afin de connecter une unité de batterie à charger à une seconde unité d'égalisation dans l'appareil de circuit de commande, et est également utilisé pour commander la seconde unité d'égalisation afin de charger l'unité de batterie à charger à travers une alimentation électrique ; et
l'appareil de circuit de commande (300) est configuré pour : recevoir le second signal de commande, connecter l'unité de batterie à charger et la seconde unité d'égalisation à travers l'unité de réseau matriciel de commutation sous la commande du second signal de commande, et charger l'unité de batterie à charger à travers l'alimentation électrique sous la commande du second signal de commande.
